# EUROPÄISCHE PATENTSCHRIFT

(11) **EP 4 123 267 B1**
(45) Veröffentlichungstag und Bekanntmachung des Hinweises auf die Patenterteilung: **11.06.2025**
(21) Anmeldenummer: 22184342.8
(22) Anmeldetag: 12.07.2022
(51) Int. Cl.: G01F 1/66, G01F 1/667, B06B 1/06, G01H 11/08

(54) **ULTRASCHALLDURCHFLUSSMESSGERÄT UND VERFAHREN ZUM BETREIBEN EINES ULTRASCHALLDURCHFLUSSMESSGERÄTS**
ULTRASONIC FLOW METER AND METHOD FOR OPERATING SAME
DÉBITMÈTRE À ULTRASONS ET PROCÉDÉ PERMETTANT DE FAIRE FONCTIONNER UN DÉBITMÈTRE À ULTRASONS

(30) Priorität: 21.07.2021 DE 102021118821
(43) Veröffentlichungstag der Anmeldung: 25.01.2023
(73) Patentinhaber: Krohne Messtechnik GmbH, 47058 Duisburg (DE)
(72) Erfinder: VOGT, Michael, 44797 Bochum (DE); HOGENDOORN, Cornelis Johannes, 4211 BG Spijk (NL)
(74) Vertreter: Gesthuysen Patentanwälte

(56) Entgegenhaltungen:
- EP-A1- 3 644 022
- WO-A1-2021/130309
- CN-A- 111 060 171
- DE-A1- 102011 005 170
- DE-B3- 102006 029 199
- US-A1- 2015 160 053
- US-A1- 2016 231 154
- US-A1- 2017 059 378
- US-A1- 2021 080 303
- US-B1- 6 508 133

## Beschreibung

Die Erfindung geht aus von einem Ultraschalldurchflussmessgerät nach Anspruch 1, umfassend wenigstens einen ersten Ultraschallwandler und einen zweiten Ultraschallwandler und weiter umfassend eine Steuer- und Auswerteeinheit, wobei die Steuer- und Auswerteeinheit mit dem ersten Ultraschallwandler und dem zweiten Ultraschallwandler verbunden ist,
wobei der erste Ultraschallwandler und/oder der zweite Ultraschallwandler als Ultraschallsender und/oder Ultraschallempfänger ausgebildet ist bzw. sind,
wobei der erste Ultraschallwandler und/oder der zweite Ultraschallwandler als Keilwandler ausgebildet ist bzw. sind,
wobei der erste Ultraschallwandler und der zweite Ultraschallwandler derart an einem Messrohr angeordnet sind, dass zwischen dem ersten und dem zweiten Ultraschallwandler ein Signalpfad ausgebildet ist, sodass ein von dem Ultraschallsender ausgesendetes Messsignal über den Signalpfad zum Ultraschallempfänger verläuft.

Darüber hinaus betrifft die Erfindung ein Verfahren nach Anspruch 12, zum Betreiben eines Ultraschalldurchflussmessgeräts,
wobei das Ultraschalldurchflussmessgerät wenigstens einen ersten Ultraschallwandler und einen zweiten Ultraschallwandler und eine Steuer- und Auswerteeinheit umfasst, wobei die Steuer- und Auswerteeinheit mit dem ersten Ultraschallwandler und dem zweiten Ultraschallwandler verbunden ist,
wobei der erste Ultraschallwandler und/oder der zweite Ultraschallwandler als Ultraschallsender und/oder Ultraschallempfänger ausgebildet ist bzw. sind,
wobei der erste Ultraschallwandler und/oder der zweite Ultraschallwandler als Keilwandler ausgebildet ist bzw. sind,
wobei der erste Ultraschallwandler und der zweite Ultraschallwandler derart an einem Messrohr angeordnet sind, dass zwischen dem ersten und dem zweiten Ultraschallwandler ein Signalpfad ausgebildet ist, sodass ein von dem Ultraschallsender ausgesendetes Messsignal über den Signalpfad zum Ultraschallempfänger verläuft.

Aus dem Stand der Technik bekannte Ultraschalldurchflussmessgeräte sind häufig auf die Messung von festgelegten Medien in zu erwartenden Bereichen einer Durchflussgeschwindigkeit optimiert. Hierzu sind die Ultraschallwandler derart an dem Messrohr angeordnet, dass zwischen den Ultraschallwandlern ein Signalpfad ausgebildet ist, dessen Geometrie auf die erwarteten Messbereiche und -bedingungen angepasst ist.

Solche Messgeräte weisen jedoch im Fall der Messung unter davon abweichenden Bedingungen, im Detail von hohen Durchflussgeschwindigkeiten oder anderen Medien oder variierenden Medieneigenschaften, häufig den Nachteil auf, dass die Transmission des Messsignals und damit die am Empfänger erfasste Amplitude des Messsignals sich aufgrund der Änderung der Geometrie des Signalpfads zwischen den Ultraschallwandlern verringert. Beispielsweise wird das Messsignal bei besonders hohen Durchflussgeschwindigkeit durch den Mitführeffekt verweht, sodass es nicht mehr optimal auf den Ultraschallempfänger trifft.

Insbesondere bei Clamp On-Geräten, wie offenbart in US2015/160053-A1, DE102011005170-A1 und US2021/080303-A1, ist eine Neujustierung erforderlich,
wenn sich die Schallgeschwindigkeit des Mediums ändert. Eine Änderung des Mediums oder der Schallgeschwindigkeit des Mediums aufgrund von sich ändernden Prozessparametern hat zur Folge, dass sich der Einkoppelwinkel des Messsignals in das Messrohr ändert, was ebenfalls Einfluss auf den Verlauf des Signalpfads des Messsignals hat. In der Folge sinkt die am Ultraschallempfänger erfasste Amplitude, im schlechtesten Fall erfasst der Ultraschallempfänger das Messsignal nicht mehr.

Ausgehend von dem dargelegten Stand der Technik ist es daher Aufgabe der Erfindung, ein Ultraschalldurchflussmessgerät anzugeben, das einen besonders hohen Anwendungsbereich aufweist. Darüber hinaus ist es Aufgabe der Erfindung, ein verbessertes Verfahren zum Betreiben eines Ultraschalldurchflussmessgeräts anzugeben.

Grundsätzlich umfasst ein Ultraschalldurchflussmessgerät im Rahmen der vorliegenden Erfindung die Bestimmung des Durchflusses bzw. der Durchflussgeschwindigkeit basierend auf den bekannten üblichen Messverfahren, insbesondere basierend auf dem Laufzeitprinzip oder auf dem Dopplerprinzip oder auf dem Driftprinzip.

Das Messrohr kann im Rahmen der vorliegenden Erfindung Teil des Ultraschalldurchflussmessgeräts sein. Alternativ kann das Messrohr aber auch Teil einer Anlage sein, wobei das Durchflussmessgerät für den Betrieb auf bzw. an dem Messrohr angeordnet ist.

Der erste Ultraschallwandler weist ein erstes Array aus wenigstens zwei aktiven Elementen auf und/oder dass der zweite Ultraschallwandler weist ein zweites Array aus wenigstens zwei aktiven Elementen auf, wobei wenigstens ein Ultraschallwandler, der ein Array aus wenigstens zwei aktiven Elementen aufweist, als Keilwandler ausgebildet ist,
wobei wenigstens zwei aktive Elemente des auf dem ersten Ultraschallwandler angeordneten Arrays separat von der Steuer- und Auswerteeinheit ansteuerbar sind und/oder wobei wenigstens zwei aktive Elemente des auf dem zweiten Ultraschallwandler angeordneten Arrays separat von der Steuer- und Auswerteeinheit ansteuerbar sind.

Dabei steuert die Steuer- und Auswerteeinheit die aktiven Elemente jeweils mit Ansteuerungsparametern, wie beispielsweise einer Phase, einer Frequenz und einer Amplitude, an.

Besonders bevorzugt ist jeder Ultraschallwandler, der ein Array aus wenigstens zwei aktiven Elementen aufweist, als Keilwandler ausgebildet.

Erfindungsgemäß wurde erkannt, dass der Einsatz eines Ultraschallwandlers, der als Keilwandler ausgebildet ist, wobei der Ultraschallwandler ein Array aus wenigstens zwei aktiven Elementen aufweist, insofern vorteilhaft ist, als dass sich ein von dem Array ausgesendetes Messsignal aus wenigstens zwei Komponenten, nämlich aus wenigstens einem ersten Ultraschallsignal und einem zweiten Ultraschallsignal, zusammensetzt.

Dadurch, dass wenigstens zwei aktive Elemente separat ansteuerbar sind, kann Einfluss auf die Form und/oder den Abstrahlwinkel des Messsignals genommen werden Hierzu können die einzelnen aktiven Elemente zeitlich versetzt und/oder mit unterschiedlicher Amplitude und/oder mit unterschiedlicher Phase betrieben werden. Im Ergebnis kann somit die Form des Messsignal und/oder die Geometrie des von dem Messsignal durchlaufenen Signalpfads beeinflusst und insbesondere an Änderungen im Betrieb angepasst werden, sodass das Ultraschalldurchflussmessgerät stets unter optimalen Bedingungen arbeiten kann.

Das sich aus der Überlagerung der einzelnen Ultraschallsignale ergebende Messsignal weist zumindest eine Hauptkeule auf. Die Hauptkeule wird im Betrieb zur Bestimmung des Durchflusses auf den Empfänger ausgerichtet. Je nach Ausgestaltung und/oder Ansteuerung des Arrays weist das Messsignal wenigstens zwei Nebenkeulen und/oder wenigstens zwei Gitterkeulen auf.

Die Nebenkeulen werden im Wesentlich beeinflusst durch die Ansteuerung der aktiven Elemente, insbesondere durch die Amplitude, mit der die einzelnen aktiven Elemente angesteuert werden.

Die Gitterkeulen sind Wiederholungen der Hauptkeule inklusive eventuell vorhandener Nebenkeulen. Das Auftreten von Gitterkeulen wird beeinflusst durch den Abstand d der aktiven Elemente. Dabei wird unter dem Abstand d der aktiven Elemente der Abstand der Mitten der aktiven Element zueinander verstanden.

Besonders bevorzugt ist das Array derart ausgebildet und/oder wird das Array im Betrieb derart angesteuert, dass sich im Wesentlichen keine Nebenkeulen und/oder Gitterkeulen ausbilden.

Alternativ kann das Array derart ausgebildet und/oder angesteuert werden, dass sich genau zwei Gitterkeulen ergeben.

Die vorliegende Erfindung betrifft die Beeinflussung des Messsignals mittels eines Phased Arrays. Sofern das erste Ultraschallsignal und das zweite Ultraschallsignal zeitversetzt ausgesendet werden, so ist dieser Zeitversatz derart minimal, dass durch die Überlagerung der Signale ein gemeinsames Messsignal auf Empfänger trifft, sodass am Empfänger das erste Ultraschallsignal und das zweite Ultraschallsignal nicht unterscheidbar sind. Damit betrifft die Erfindung kein Zeitmultiplexverfahren, in dem Signale nacheinander einzeln, also ohne sich zu überlagern, ausgesendet und/oder übertragen werden.

Alternativ oder zusätzlich weist das wenigstens eine Array in dem Fall, in dem es als Empfangselement ausgebildet ist, eine Empfangscharakteristik auf, die sich dadurch ergibt, dass die an den einzelnen aktiven Elementen gemessenen Signale gegeneinander zeitverzögert und/oder phasenversetzt und/oder mit unterschiedlicher Amplitude gewichtet überlagert werden.

Insofern kann auch die Empfangscharakteristik auf eine prozessbedingte Änderung des Signalpfads im Betrieb derart angepasst werden, dass das Ultraschalldurchflussmessgerät stets unter optimiert arbeiten kann.

Besonders bevorzugt ist der wenigstens eine, das Array aus aktiven Elementen aufweisende Keilwandler derart auf dem Messrohr angeordnet, dass eine Abstrahlung des Messsignals senkrecht zur Schräge des Keils einen Signalpfad definiert, der bei erwartungsgemäßen Medien und erwartungsgemäßem Durchfluss optimal auf den Ultraschallempfänger trifft. Die Abstrahlung des Messsignals senkrecht zur Schräge des Keils entspricht einem unverschwenkten Messsignal, also einem Schwenkwinkel von 0°. Dies weist den Vorteil auf, dass eine Änderung des Abstrahlwinkels des Messsignals bei Änderung von Betriebsbedingungen gering sein muss, um der betriebsbedingten Auswirkung auf das Messsignal entgegen zu wirken.

Grundsätzlich ist ein aktives Element im Rahmen der vorliegenden Erfindung ein elektroakustisches Sende- und/oder Empfangselement.

Gemäß einer Ausgestaltung ist genau ein Ultraschallwandler als Keilwandler ausgebildet, der ein Array aus wenigstens zwei aktiven Elementen aufweist.

Gemäß einer weiteren Ausgestaltung weist der erste Ultraschallwandler ein erstes Array aus wenigstens zwei aktiven Elementen auf und der zweite Ultraschallwandler weist ein zweites Array aus wenigstens zwei aktiven Elementen auf. Diese Ausgestaltung ist besonders vorteilhaft, da im Betrieb sowohl das Messsignal, das in Strömungsrichtung ausgesendet wird, durch Ansteuerung der einzelnen aktiven Elemente beeinflussbar ist, als auch das Messsignal, das entgegen der Strömungsrichtung ausgesendet wird.

Zudem kann sowohl bei der Messung in Strömungsrichtung als auch bei der Messung entgegen der Strömungsrichtung das als Empfänger ausgebildete Array auf den Empfang des Messsignals angepasst werden.

Ein Array aus wenigstens zwei aktiven Elementen weist gemäß einer bevorzugten Ausgestaltung mehr als zwei aktive Elemente auf.

Besonders bevorzugt sind alle aktiven Elemente eines Arrays separat von der Steuer- und Auswerteeinheit ansteuerbar.

Alternativ weist ein Array wenigstens zwei Gruppen an aktiven Elementen auf, wobei die einer Gruppe zugeordneten aktiven Elemente zusammen ansteuerbar sind und wobei wenigstens eine Gruppe wenigstens zwei aktive Elemente aufweist.

Gemäß einer nächsten vorteilhaften Ausgestaltung weist der erste Ultraschallwandler ein erstes Array aus wenigstens zwei aktiven Elementen auf und der zweite Ultraschallwandler weist ein zweites Array aus wenigstens zwei aktiven Elementen auf, wobei das erste Array und das zweite Array die gleiche Anzahl an aktiven Elementen oder eine unterschiedliche Anzahl an aktiven Elementen aufweisen.

Weist das erste Array die gleiche Anzahl an aktiven Elementen auf wie das zweite Array, können die Ultraschallwandler besonders einfach hergestellt werden.

Ist die Anzahl der aktiven Elemente des ersten Arrays verschieden von der Anzahl der aktiven Elemente des zweiten Arrays, kann die Anzahl der für den Betrieb notwendigen aktiven Elemente in vorteilhafter Weise minimiert werden. Dies hat den Vorteil, dass die Herstellung und der Betrieb des Ultraschalldurchflussmessgeräts insgesamt vereinfacht werden kann.

Gemäß einer weiterhin bevorzugten Ausgestaltung weist der erste Ultraschallwandler ein erstes Array aus wenigstens zwei aktiven Elementen und der zweite Ultraschallwandler weist ein zweites Array aus wenigstens zwei aktiven Elementen auf, wobei das erste Array und das zweite Array eine identische Anordnung oder eine unterschiedliche Anordnung der aktiven Elemente aufweisen.

Weist das erste Array und das zweite Array eine identische Anordnung der aktiven Elemente auf, kann die Variation des Abstrahlwinkels des Messsignals, das in Strömungsrichtung ausgesendet wird, identisch ausgebildet sein zu der Variation des Abstrahlwinkels des Messsignals, das entgegen der Strömungsrichtung ausgesendet wird.

Gemäß einer alternativen Ausgestaltung weisen das erste Array und das zweite Array eine unterschiedliche Anordnung der aktiven Elemente auf. Besonders bevorzugt sind das erste Array und das zweite Array derart aufeinander abgestimmt, dass unerwünschte Anteile des von dem Ultraschallsenderarray ausgesendeten Messsignals durch Minima in der Empfangscharakteristik des Ultraschallempfängerarrays unterdrückt werden können.

Gemäß einer nächsten Ausgestaltung ist bzw. sind das erste Array und/oder das zweite Array zumindest bereichsweise zweidimensional ausgebildet. Diese Ausgestaltung weist den Vorteil auf, dass im Betrieb das Messsignals in räumlich verschwenkt werden kann.

Grundsätzlich kann die Schräge des Keils planar oder auch gekrümmt ausgebildet sein. Ist gemäß einer Ausgestaltung die Schräge des Keils gekrümmt ausgebildet, kann der maximale Schwenkwinkel im Randbereich des Messrohrs vergrößert werden.

Gemäß einer weiteren Ausgestaltung ist bzw. sind das erste Array und/oder das zweite Array zumindest bereichsweise eindimensional ausgebildet. Diese Ausgestaltung ist insbesondere vorteilhaft, wenn das erste Array und das zweite Array in einem Winkel zueinander ausgerichtet sind.

Beispielsweise ist das zweite Array im Wesentlichen senkrecht zum ersten Array ausgerichtet.

Diese Ausgestaltung weist den Vorteil auf, dass der Abstrahlwinkel des Messsignals insgesamt in zwei Ebenen verändert werden kann, wobei gleichzeitig die Anzahl an notwendigen aktiven Elementen minimiert werden kann.

Eine nächste Ausgestaltung zeichnet sich dadurch aus, dass das erste Array und/oder das zweite Array dadurch hergestellt ist bzw. sind, dass in ein elektroakustisches Substrat wenigstens ein Spalt eingebracht wird, sodass das Substrat an der Oberseite wenigstens zwei separat kontaktierbare Bereiche und an der Unterseite eine gemeinsame Masseverbindung aufweist, wobei der wenigstens eine Spalt vorzugsweise mit einem akustisch isolierenden Material gefüllt ist.

Der Spalt kann beispielsweise durch Sägen oder Ätzen oder durch ein anderes geeignetes Verfahren in das Substrat eingebracht werden.

Das elektroakustische Substrat ist vorzugsweise ein piezoelektrisches Substrat.

Alternativ kann das erste Array und/oder das zweite Array dadurch hergestellt sein, dass ein elektroakustisches Substrat auf einen Träger aufgebracht wird und dass in das elektroakustische Substrat wenigstens ein Spalt eingebracht wird, wobei der Spalt das elektroakustische Substrat vollständig durchtrennt, wobei der wenigstens eine Spalt vorzugsweise mit einem akustisch isolierenden Material gefüllt ist.

Durch die Füllung des Spaltes kann ein Übersprechen der einzelnen aktiven Elemente aufeinander vermieden oder zumindest minimiert werden. Beispielsweise ist der wenigstens eine Spalt mit Silikon oder Epoxid-Harz oder Gummi gefüllt.

Gemäß einer nächsten Ausgestaltung des Ultraschalldurchflussmessgeräts ist die Anzahl an aktiven Elementen und die Geometrie des ersten Arrays und/oder des zweiten Arrays in Abhängigkeit von dem zu erwartenden maximalen Schwenkwinkel festgelegt, wobei vorzugsweise gleichzeitig die Anzahl an aktiven Elementen minimiert ist.

Im Detail bestimmt die Gesamtlänge L des Arrays die Breite der Hauptkeule des Messsignals. Der Abstand d zwischen den aktiven Elementen bestimmt den Winkelabstand zwischen der Hauptkeule und den Gitterkeulen. Durch passende Einstellung der Breite der aktiven Elemente kann die Amplitude der Gitterkeulen abgeschwächt werden.

Eine Konstruktion eines Arrays aus aktiven Elementen kann in vorteilhafter Weise die nachfolgenden Schritte umfassen:
Zunächst wird zur Festlegung der Breite der Hauptkeule die Gesamtlänge L des Arrays bestimmt.

Anschließend wird der erforderliche maximale Schwenkwinkel ρ₀, unter dem die Hauptkeule abgestrahlt werden soll, bestimmt.

Ausgehend davon wird der minimal tolerierbare Winkelabstand der Gitterkeulen zu der Hauptkeule bestimmt. Dieser sollte derart bemessen sein, dass die Gitterkeulen die Messung nicht beeinflussen. Die Gitterkeulen können darüber hinaus durch Einstellung der Breite w der aktiven Elemente abgeschwächt werden.

Schließlich wird der maximale Abstand der aktiven Elemente und weiterhin die minimal erforderliche Anzahl an aktiven Elementen bestimmt.

Durch die Minimierung der Anzahl an aktiven Elementen kann ebenfalls die Elektronik der Steuer- und Auswerteeinheit vereinfacht werden, da weniger Kanäle zur Ansteuerung der einzelnen aktiven Elemente vorhanden sein müssen.

Besonders bevorzugt ist die Anzahl an aktiven Elementen und/oder die Geometrie des ersten Arrays und des zweiten Arrays derart aufeinander abgestimmt, dass unerwünschte Signalanteile, beispielsweise Nebenkeulen und/oder Gitterkeulen, des durch den Ultraschallsender ausgesendeten Messsignals durch Minima in der Empfangscharakteristik des Ultraschallempfängers unterdrückt werden.

Gemäß einer nächsten vorteilhaften Ausgestaltung weist der erste Ultraschallwandler und/oder der zweite Ultraschallwandler ein elektroakustisches Substrat umfassend wenigstens eine erste und eine zweite elektroakustische Scheibe auf, wobei die erste und die zweite elektroakustische Scheibe aufeinander angeordnet sind und wobei das Array aus aktiven Elementen dieses Ultraschallwandlers in der ersten elektroakustischen Scheibe und/oder in der zweiten elektroakustischen Scheibe angeordnet ist.

Ist sowohl auf der ersten als auch auf der zweiten elektroakustischen Scheibe wenigstens ein aktives Element angeordnet, so kann neben der Variation des Abstrahlwinkels des Messsignals ebenfalls Einfluss auf die Frequenz des Messsignals genommen werden. Sind die aktiven Elemente separat ansteuerbar, können auch die elektroakustischen Scheiben separat zur Schwingung angeregt werden. Demnach kann beispielsweise eine elektroakustische Scheibe angeregt werden, wobei die andere Scheibe mitschwingt. Alternativ können auch beide Scheiben zur Schwingung angeregt werden. Durch die Variation des Schwingungskörpers kann damit auch die Frequenz des Messsignals variiert werden,

Das Ultraschalldurchflussmessgerät kann damit besonders flexibel an unterschiedliche Messsituationen angepasst werden.

Besonders bevorzugt ist das Ultraschalldurchflussmessgerät zur Durchführung eines der nachfolgend beschriebenen Verfahren ausgebildet.

Gemäß einer zweiten Lehre der vorliegenden Erfindung wird die eingangs genannte Aufgabe durch ein eingangs beschriebenes Verfahren zum Betreiben eines Ultraschalldurchflussmessgeräts dadurch gelöst,
dass der erste Ultraschallwandler ein erstes Array aus wenigstens zwei aktiven Elementen und/oder dass der zweite Ultraschallwandler ein zweites Array aus wenigstens zwei aktiven Elementen aufweist,
wobei wenigstens zwei aktive Elemente des auf dem ersten Ultraschallwandler angeordneten Arrays separat von der Steuer- und Auswerteeinheit angesteuert werden und/oder dass wenigstens zwei aktive Elemente des auf dem zweiten Ultraschallwandler angeordneten Arrays separat von der Steuer- und Auswerteeinheit angesteuert werden,
und dass die Steuer- und Auswerteeinheit das als Ultraschallsender funktionierende Array derart ansteuert, dass der Abstrahlwinkel des Messsignals zumindest zeitweise variiert wird und/oder dass die Steuer- und Auswerteeinheit die Empfangscharakteristik des als Ultraschallempfänger funktionierenden Arrays zumindest zeitweise variiert,
sodass zur Bestimmung des Durchflusses während der Messung das Messsignal optimiert auf den Ultraschallempfänger trifft und/oder der Ultraschallempfänger das Messsignal optimiert auf den Abstrahlwinkel empfängt.

Das erfindungsgemäße Verfahren wird dazu eingesetzt, die Ultraschallwandler auf dem Messrohr derart passend zu platzieren und auszurichten, dass das Ultraschallsenderarray das Messsignal unverschwenkt aussendet und dass das Ultraschallempfängerarray das Messsignal unverschwenkt empfängt. Hierzu werden zunächst die Ultraschwandler derart auf dem Messrohr platziert, dass ein von dem Ultraschallsender ausgesendetes Messsignal über den Signalpfad zum Ultraschallempfänger gelangt. Durch Verschwenken der Empfangscharakteristik wird am Empfänger der Schwenkwinkel, unter dem der Empfänger das Messsignal optimiert empfängt, festgestellt. Ausgehend von dem Schwenkwinkel bestimmt die Steuer- und Auswerteeinheit unter Berücksichtigung der Geometrie des Signalpfads eine Position für den Ultraschallsender und/oder den Ultraschallempfänger, an der das Ultraschallsenderarray das Messsignal unverschwenkt aussendet und an der das Ultraschallempfängerarray das Messsignal unverschwenkt empfängt. Auf diese Weise können die Ultraschallwandler an dem Messrohr vor der Inbetriebnahme oder auch in regelmäßigen oder unregelmäßigen Abständen aufeinander justiert werden.

Gemäß einer Ausgestaltung weist zumindest der in einem Betriebszustand als Ultraschallsender arbeitende Ultraschallwandler ein Array aus wenigstens zwei aktiven Elementen auf, wobei die wenigstens zwei aktiven Elemente des Ultraschallsenders von der Steuer- und Auswerteeinheit separat ansteuerbar sind,
wobei in dem ersten Betriebszustand das erste aktive Element des Ultraschallsenders ein erstes Ultraschallsignal aussendet und
wobei das zweite aktive Element des Ultraschallsenders ein zweites Ultraschallsignal aussendet,
sodass sich das erste Ultraschallsignal und das zweite Ultraschallsignal zu dem Messsignal überlagern.

Der Ultraschallempfänger empfängt das Messsignal und an leitet es an die Steuer- und Auswerteeinheit, die unter Berücksichtigung des empfangenen Messsignals den Durchfluss bestimmt, weiter.

Gemäß einer besonders bevorzugten Ausgestaltung des Verfahrens weist das Messsignal durch die Überlagerung von zumindest dem ersten Ultraschallsignal und dem zweiten Ultraschallsignal zumindest eine Hauptkeule auf. Zudem kann das Messsignal auch wenigstens zwei Nebenkeulen und/oder wenigstens zwei Gitterkeulen aufweisen.

Gemäß einer weiteren besonders bevorzugten Ausgestaltung werden das erste Ultraschallsignal und das zweite Ultraschallsignal zumindest zeitweise zeitversetzt und/oder mit unterschiedlicher Amplitude und/oder mit unterschiedlicher Phase ausgesendet, wodurch der Abstrahlwinkel des Messsignals, insbesondere der Hauptkeule des Messsignals, verändert wird. Auf diese Weise kann der von dem Messsignal durchlaufene Signalpfad verändert werden, sodass das Maximum des Messsignals, insbesondere das Maximum der Hauptkeule, optimiert auf den Ultraschallempfänger trifft.

Alternativ oder zusätzlich können zumindest zeitweise die an den einzelnen aktiven Elementen des als Ultraschallempfänger funktionierenden Arrays gemessenen Signale gegeneinander zeitverzögert und/oder phasenversetzt und/oder mit unterschiedlicher Amplitude gewichtet überlagert werden. Auf diese Weise kann die Empfangscharakteristik verschwenkt werden, wodurch ebenfalls erreicht wird, dass das Maximum des Messsignals, insbesondere das Maximum der Hauptkeule, optimiert auf den Ultraschallempfänger trifft. Gemäß einer weiteren Ausführung des Verfahrens ist wenigstens ein Array zumindest bereichsweise zweidimensional ausgebildet, sodass der Abstrahlwinkel des Messsignals, insbesondere der Hauptkeule, und/oder die Empfangscharakteristik des Arrays innerhalb eines Raumwinkels variiert werden kann. Dies hat den Vorteil, dass sowohl in dem Fall, in dem das Messsignal aufgrund einer von der erwarteten Geschwindigkeit abweichenden Geschwindigkeit den Ultraschallempfänger nicht oder nicht bestmöglich trifft, die Einkopplung des Messsignals nachjustiert werden kann, sodass das Messsignal optimiert auf den Ultraschallempfänger trifft. Darüber hinaus kann das Messsignal auch derart in den Randbereich des Messrohrs verschwenkt werden, dass es ebenfalls möglich ist, Randbereiche des Strömungsprofils zu vermessen. Darüber hinaus kann ebenfalls die Empfangscharakteristik des Arrays an eine Änderung des Signalpfads des Messsignals angepasst werden. Gemäß einer nächsten Ausgestaltung des Verfahrens überwacht die Steuer- und Auswerteeinheit die vom Ultraschallempfänger erfasste Amplitude des Messsignals, wobei der Abstrahlwinkel des Messsignals und/oder die Empfangscharakteristik durch die Steuer- und Auswerteeinheit verändert wird, wenn die Amplitude unter einen Schwellwert sinkt.

Gemäß einer besonders bevorzugten Ausgestaltung des Verfahrens variiert die Steuer- und Auswerteeinheit zur Maximierung des Messsignals am Ultraschallempfänger in regelmäßigen oder unregelmäßigen Abständen den Abstrahlwinkel des Messsignals und/oder die Empfangscharakteristik des Ultraschallempfängers, wobei die Steuer- und Auswerteeinheit während der Variation ein Maximum der Amplitude am Ultraschallempfänger sowie die entsprechenden Ansteuerungsparameter der aktiven Elemente hierzu erfasst, und dass die Steuer- und Auswerteeinheit anschließend das Array aus den wenigstens zwei aktiven Elementen des Ultraschallsenders und/oder des Ultraschallempfängers gemäß der bestimmten Ansteuerungsparameter ansteuert.

Die Variation des Abstrahlwinkels erfolgt vorzugsweise um einen voreingestellten Winkel, beispielsweise von ca. 5° oder von ca. 10° oder von ca. 20°, um die aktuelle Position der Hauptkeule.

Beispielsweise variiert die Steuer- und Auswerteeinheit den Abstrahlwinkel des Messsignals mit einer Frequenz von 1 Hz oder 0,1 Hz oder 0,01 Hz.

Durch dieses regelmäßige leichte Verschwenken des Messsignals bzw. der Empfangscharakteristik ist gewährleistet, dass das Durchflussmessgerät im Betrieb optimierte Ansteuerungsparameter für den Ultraschallsender und/oder den Ultraschallempfänger erkennt und diese verwendet.

Im Ergebnis trifft damit das Messsignal während des Messbetriebs stets optimiert auf den Ultraschallempfänger.

Am Anfang des Messbetriebs sind die Schwenkwinkel am Ultraschallsender und am Ultraschallempfänger vorzugsweise identisch ausgerichtet. Anschließend wird die Ausrichtung des Ultraschallsenders und/oder die Ausrichtung des Ultraschallempfängers derart variiert, dass der Ultraschallempfänger das Messsignal optimal empfängt.

Alternativ oder zusätzlich passt die Steuer- und Auswerteeinheit den Abstrahlwinkel des von dem Ultraschallsender ausgesendeten Messsignals und/oder die Empfangscharakteristik des Ultraschallempfängers in Abhängigkeit von der gemessenen Durchflussgeschwindigkeit des Mediums und/oder in Abhängigkeit von der Schallgeschwindigkeit des Mediums, derart an, dass das Messsignal am Ultraschallempfänger maximal ist.

Hierzu weist die Steuer- und Auswerteeinheit besonders bevorzugt eine Speichereinheit auf, wobei in der Speichereinheit ein Zusammenhang zwischen einem Abstrahlwinkel des Messsignals bzw. Ansteuerungsparametern für das Array aus aktiven Elementen und verschiedenen Medien und/oder verschiedenen Durchflussgeschwindigkeiten und/oder verschiedenen Schallgeschwindigkeiten hinterlegt ist, sodass bei Änderung der Durchflussgeschwindigkeit und/oder bei Änderung des Mediums und/oder bei Änderung der Schallgeschwindigkeit des Mediums aufgrund von sich ändernden Prozessparametern die Steuer- und Auswerteeinheit den Abstrahlwinkel des Messsignals bzw. die Ansteuerungsparameter für das Array aus aktiven Elementen und/oder die Empfangscharakteristik des Ultraschallempfängers gemäß dem hinterlegten Zusammenhang automatisch anpasst.

Umgekehrt kann durch die Hinterlegung des Zusammenhangs zwischen einem Abstrahlwinkel des Messsignals bzw. Ansteuerungsparametern für das Array aus aktiven Elementen und verschiedenen Medien und/oder verschiedenen Durchflussgeschwindigkeiten in der Speichereinheit von einem durch die Steuer- und Auswerteeinheit gefundenen optimalen Abstrahlwinkel eine Durchflussgeschwindigkeit und/oder ein Medium bestimmt werden. Insofern kann durch die Steuer- und Auswerteeinheit die Durchflussgeschwindigkeit auf zwei Arten bestimmt werden, die als gegenseitige Kontrollinstanz dienen. Im Detail kann die Durchflussgeschwindigkeit sowohl basierend auf dem dem Messgerät zugrundeliegenden Prinzip sowie durch Auswertung des Schwenkwinkels in Kombination mit dem hinterlegten Zusammenhang bestimmt werden. Zudem kann auch durch den eingestellten Abstrahlwinkel ein Rückschluss auf akustische Eigenschaften des Mediums getroffen werden.

Neben der Möglichkeit, durch Einstellung des Messsignals das Signal am Ultraschallempfänger zu maximieren, kann die Ausrichtung des Messsignals oder eines Teils des Messsignals ebenfalls dazu genutzt werden, Informationen über einen Betriebszustand und/oder über die Messumgebung zu erhalten.

Hierzu weist das Messsignal beispielsweise wenigstens eine Hauptkeule und wenigstens zwei Nebenkeulen und/oder zwei Gitterkeulen auf, wobei die wenigstens eine Hauptkeule oder wenigstens eine Nebenkeule oder wenigstens eine Gitterkeule zumindest zeitweise derart auf das Messrohr ausgerichtet wird, dass die Nebenkeule oder die Gitterkeule am Messrohr reflektiert wird und die Reflexion von dem zuvor als Ultraschallsender arbeitenden Array aus aktiven Elementen wieder empfangen wird, wobei die Steuer- und Auswerteeinheit aus der Reflexion der wenigstens einen Hauptkeule oder der einen Nebenkeule oder der Gitterkeule wenigstens eine Information über einen Betriebszustand und/oder die Messumgebung bestimmt. Beispielsweise bestimmt die Steuer- und Auswerteeinheit die Dicke der Messrohrwand und/oder den inneren Messrohrdurchmesser. Durch wiederholtes Bestimmen der Dicke der Messrohrwand können beispielsweise Ablagerungen an der Messrohrwand erkannt werden. Insbesondere kann die sich dadurch ergebende Verringerung des Messrohrdurchmessers bei der Bestimmung des Massedurchflusses berücksichtigt werden.

Alternativ oder zusätzlich kann die Hauptkeule oder eine Nebenkeule oder eine Gitterkeule derart auf das Messrohr ausgerichtet werden, dass sie eine Lamb-Welle in der Messrohrwand anregt, die sich entlang der Messrohrwand in Richtung des Ultraschallempfängers ausbreitet und von dem Ultraschallempfänger erfasst wird, wobei die Amplitude und/oder die Laufzeit und/oder das Spektrum der Lamb-Welle ausgewertet wird. Gemäß dieser Ausgestaltung kann die Ausbreitungsgeschwindigkeit des Messsignals innerhalb der Messrohrwand bestimmt werden, was die Kenntnis der Einkopplung in das Messrohr und damit die Kenntnis des von dem Messsignal durchlaufenen Signalpfads verbessert. Zudem kann aus der Ausbreitungscharakteristik der Lamb-Welle ebenfalls Ablagerungen an der Messrohrwand erkannt werden. Dies funktioniert natürlich auch, wenn der Ultraschallsender kein Array aus aktiven Elementen aufweist.

Besonders bevorzugt ist das Durchflussmessgerät zur Durchführung eines der zuvor beschriebenen Verfahren gemäß einer der oben beschriebenen Ausgestaltung ausgebildet.

Es gibt nun eine Vielzahl von Möglichkeiten das erfindungsgemäße Ultraschalldurchflussmessgerät und das Verfahren zum Betreiben des Ultraschalldurchflussmessgeräts auszugestalten und weiterzubilden. Hierzu wird verwiesen auf die den unabhängigen Patentansprüchen nachgeordneten Patentansprüche sowie auf die nachfolgende Beschreibung von bevorzugten Ausführungsbeispielen in Verbindung mit der Zeichnung. In der Zeichnung zeigen
- Fig. 1: ein erstes Ausführungsbeispiel eines erfindungsgemäßen Ultraschalldurchflussmessgeräts,
- Fig. 2: ein zweites Ausführungsbeispiel eines erfindungsgemäßen Ultraschalldurchflussmessgeräts,
- Fig. 3,: eine eindimensionale Anordnung von Aktives Elementen,
- Fig. 4: eine eindimensionale Anordnung von Aktives Elementen sowie die sich ergebene Abstrahlcharakteristik,
- Fig. 5: einen Vergleich der Abstrahlcharaktistik eines Antennenarrays und eines einzelne aktiven Elementes,
- Fig. 6: die Anordnung eines ersten eindimensionalen Arrays auf einem ersten Ultraschallwandlers und eines zweiten eindimensionalen Arrays auf einem zweiten Ultraschallwandler,
- Fig. 7: eine weitere Anordnung eines ersten eindimensionalen Arrays auf einem ersten Ultraschallwandlers und eines zweiten eindimensionalen Arrays auf einem zweiten Ultraschallwandler,
- Fig. 8: eine weitere Anordnung eines ersten eindimensionalen Arrays auf einem ersten Ultraschallwandlers und eines zweiten eindimensionalen Arrays auf einem zweiten Ultraschallwandler,
- Fig. 9: eine weitere Anordnung eines ersten Arrays auf einem ersten Ultraschallwandlers und eines zweiten Arrays auf einem zweiten Ultraschallwandler,
- Fig. 10: ein Ausführungsbeispiel eines eindimensionalen Arrays aus Abstrahlementen,
- Fig. 11: ein weiteres Ausführungsbeispiel eines zweidimensionalen Arrays aus Abstrahlementen,
- Fig. 12: ein weiteres Ausführungsbeispiel eines erfindungsgemäßen Durchflussmessgeräts,
- Fig. 13: ein weiteres Ausführungsbeispiel eines erfindungsgemäßen Durchflussmessgeräts,
- Fig. 14: ein weiteres Ausführungsbeispiel eines erfindungsgemäßen Durchflussmessgeräts,
- Fig. 15: ein erstes Ausführungsbeispiel eines erfindungsgemäßen Verfahrens,
- Fig. 16: ein nächstes Ausführungsbeispiel eines erfindungsgemäßen Verfahrens,
- Fig. 17: ein nächstes Ausführungsbeispiel eines erfindungsgemäßen Verfahrens,
- Fig. 18: ein nächstes Ausführungsbeispiel eines erfindungsgemäßen Verfahrens
- Fig. 19: ein nächstes Ausführungsbeispiel eines erfindungsgemäßen Verfahrens.

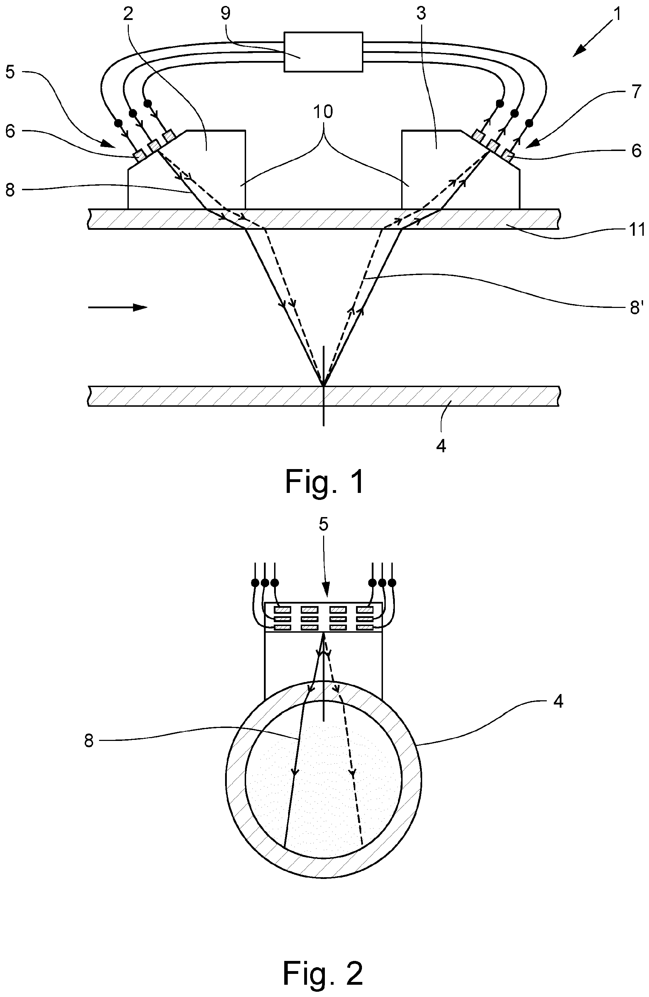

Fig. 1 zeigt ein erstes Ausführungsbeispiel eines Ultraschalldurchflussmessgeräts 1, mit einem ersten Ultraschallwandler 2 und einem zweiten Ultraschallwandler 3, wobei der erste Ultraschallwandler 2 als Keilwandler ausgebildet ist und wobei der zweite Ultraschallwandler 3 ebenfalls als Keilwandler ausgebildet ist und wobei die Ultraschallwandler 2, 3 auf einem Messrohr 4 angeordnet sind.

Der erste Ultraschallwandler 2 weist ein erstes Array 5 aus aktiven Elementen 6 auf, wobei das Array 5 derart angeordnet ist, dass das in einem ersten Betriebszustand 25 von dem Array 5 ausgesendete Messsignal 8 in das Messrohr 4 in Richtung des zweiten Ultraschallwandlers 3 ausgesendet wird.

Der zweite Ultraschallwandler 3 weist ein zweites Array 7 aus aktiven Elementen 6 auf, wobei das zweite Array 7 derart angeordnet ist, dass es das in dem ersten Betriebszustand 25 ausgesendete Messsignal 8 empfängt und in einem zweiten Betriebszustand 26 ebenfalls ein Messsignal 8 in Richtung des ersten Ultraschallwandlers 2 aussendet.

Beide Arrays 5 und 7 sind zweidimensional ausgebildet, d.h. die aktiven Elemente 6 sind in einer zweidimensionalen Ebene angeordnet. Zudem ist die Schräge der Keile 10 der Ultraschallwandler jeweils planar ausgebildet.

Zudem ist ein Steuer- und Auswerteeinheit 9 vorhanden, die die aktiven Elemente 6 mit Ansteuerungsparametern separat ansteuert.

Werden im Betrieb die aktiven Elemente 6 des Ultraschallsenders zumindest zeitweise zeitversetzt und/oder mit unterschiedlicher Amplitude und/oder unterschiedlicher Phase, also mit variierenden Ansteuerungsparametern, betrieben, so lässt sich der Abstrahlwinkel des Messsignals 8 und insofern der Winkel, in dem das Messsignal 8 in das Messrohr 4 einkoppelt, variieren.

Das dargestellte Durchflussmessgerät 1 ist derart ausgebildet, dass in einem ersten Betriebszustand 25 das erste Array 5 ein Messsignal 8 aussendet und das zweite Array 7 das Messsignal 8 empfängt, und dass in einem zweiten Betriebszustand 26 das zweite Array 7 ein Messsignal 8 aussendet, das das erste Array 5 empfängt.

Das von dem Array 5, 7 ausgesendete Messsignal 8 durchläuft zunächst den Keil, wird anschließend in die Messrohrwand 11 gebrochen und schließlich von der Messohrwand 11 in das Innere des Messrohrs 4 gebrochen.

Der Einkopplungswinkel in das Messrohrinnere ist dabei abhängig von der Schallgeschwindigkeit des Mediums und damit auch von dem im Messrohr 4 angeordneten Medium.

Im Betrieb kann es also passieren, dass bei Änderung der Schallgeschwindigkeit des Mediums durch Ablenkung des Messsignals 8 die am Ultraschallempfänger erfasste Intensität sinkt. Ebenso kann die Intensität des Messsignals 8 am Ultraschallempfänger sinken, wenn das Messsignal 8 bei hohen Durchflussgeschwindigkeiten aufgrund des Verwehungseffektes nicht mehr voll auf den Ultraschallempfänger auftrifft.

Durch die Möglichkeit der Variation des Abstrahlwinkels des Messsignals am Ultraschallsender und/oder durch die Änderung der Empfangscharakteristik am Ultraschallempfänger kann beiden Effekten entgegengewirkt werden. Insbesondere kann das Messsignal 8, das in Strömungsrichtung ausgesendet wird, anders orientiert werden als das Messsignal 8, das entgegen der Strömungsrichtung ausgesendet wird.

Das dargestellte Ausführungsbeispiel gewährleistet damit optimierte Einstellungen auch wenn die Prozessbedingung außerhalb der zunächst für eine optimale Arbeitsweise angegebenen Prozessbedingung liegen.

Fig. 2 zeigt, dass das Messsignal 8, das von einem zweidimensionalen Array 5, 7 ausgesendet wird, auch in den Randbereich des Messrohrs ausgesendet werden kann. Dies weist den Vorteil auf, dass das Strömungsprofil auch außerhalb der Messrohrmitte im Randbereich vermessen werden kann.

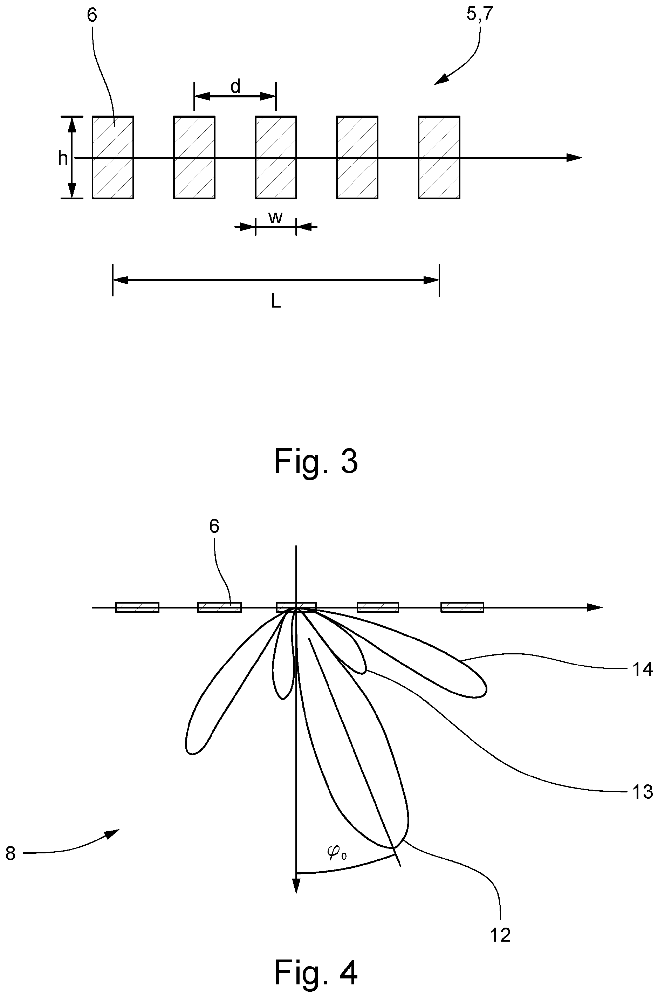

In Fig. 3 ist ein eindimensionales Array 5, 7 aus aktiven Elementen 6 dargestellt. Das eindimensionale Array 5, 7 weist im dargestellten Ausführungsbeispiel fünf nebeneinander angeordnete aktive Elemente 6 im Abstand d auf. Jedes aktive Element 6 weist eine Höhe h und eine Breite w auf. Dabei sind die aktiven Elemente 6 in einem ausreichenden Abstand d voneinander entfernt angeordnet, sodass ein Übersprechen der einzelnen aktiven Elemente 6 aufeinander verhindert oder zumindest minimiert ist.

Fig. 4 zeigt die Strahlcharakteristik des in Fig. 3 dargestellten Arrays 5, 7 im Fernfeld. Die von den einzelnen aktiven Elementen 6 ausgesendeten Signale überlagern sich im dargestellten Ausführungsbeispiel zu einem Messsignal 8, das im Fernfeld eine Hauptkeule 12, zwei Nebenkeulen 13 und zwei Gitterkeulen 14 aufweist. Die Hauptkeule 12 wird in einem Winkel ρ₀ abgestrahlt. Meist ist das Auftreten von Nebenkeulen 13 oder Gitterkeulen 14 unerwünscht, da in diese Nebenmaxima ebenfalls ein Teil der abgestrahlten Leistung einfließt. Die Nebenkeulen 13 oder Gitterkeulen 14 lassen sich jedoch auch einsetzen, um Informationen über Rohreigenschaften und/oder -geometrien bzw. Prozessbedingungen zu erhalten.

Werden die einzelnen aktiven Elemente 6 separat und zeitversetzt und/oder mit unterschiedlicher Amplitude und/oder unterschiedlicher Phase betrieben, so kann die Richtung der Hauptkeule 12 variiert werden. Im Betrieb kann die Hauptkeule 12 durch entsprechende Ansteuerung der aktiven Elemente 6 derart auf den Ultraschallempfänger ausgerichtet werden, dass die Intensität des Empfangssignals maximiert ist.

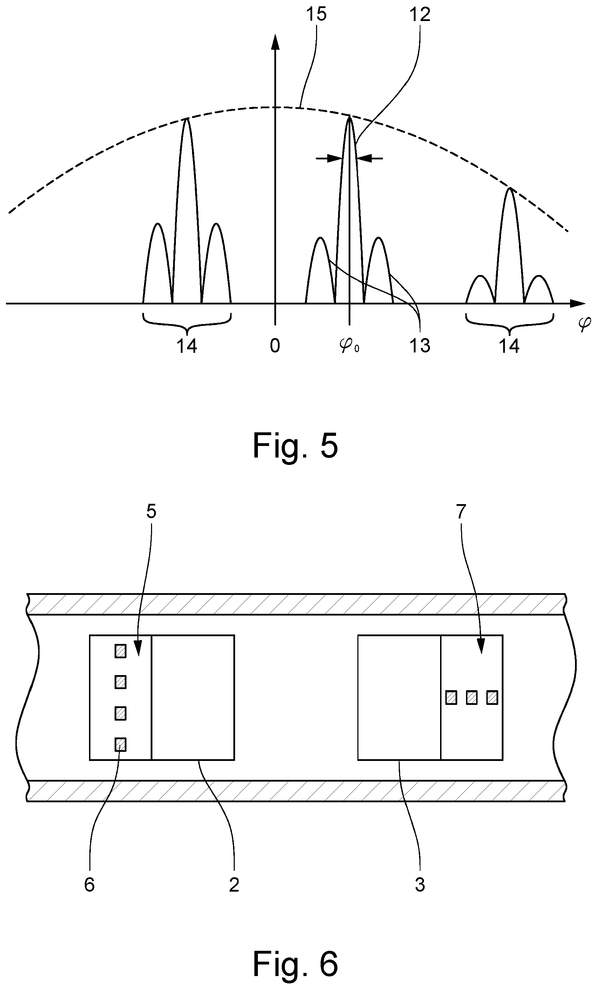

Fig. 5 zeigt den Vergleich der Strahlcharaktistik eines eindimensionalen Arrays 5, 7 aus aktiven Elementen 6 und eines einzelnen aktiven Elementes 6. Auf der Abszisse ist der Abstrahlwinkel ρ aufgetragen, wobei der Nullpunkt einer senkrechten Abstrahlung entspricht. Auf der Ordinate ist die Amplitude des Messsignals aufgetragen. Aufgrund der diskreten Anordnung einzelner aktiver Elemente ergibt sich das Messsignal 8 durch Interferenz zu einer Kombination aus Maxima und Minima. Dagegen weist die Strahlcharakteristik 15 eines einzelnen aktiven Elementes 6 eine kontinuierliche Verteilung über den betrachteten Winkelbereich auf.

In einem Abstrahlwinkel φ₀ wird von dem Array 5, 7 die Hauptkeule 12 ausgesendet. Neben der Hauptkeule 12 bilden sich Nebenkeulen 13. Darüber hinaus sind zwei Gitterkeulen 14 vorhanden. Die Breite der Hauptkeule ist proportional zu λ/L, wobei λ die Wellenlänge des Messsignals 8 und L die Gesamtlänge des Arrays 5, 7 ist. Der Winkelabstand der Gitterkeulen 14 zur Hauptkeule 12 ist proportional zu λ/d, wobei λ die Wellenlänge des Messsignals 8 und d der Abstand der einzelnen aktiven Elemente 6 ist. Die Winkelausdehnung der Abstrahlcharakteristik 15 eines einzelnen aktiven Elementes 6 ist proportional zu λ/w, wobei λ die Wellenlänge des Messsignals 8 und w die Breite des aktiven Elementes 6 ist.

Insofern kann durch entsprechende geometrische Ausgestaltung des Arrays 5, 7 die Form des Messsignals 8 an die zu erwartende Messsituation angepasst werden.

Fig. 6 zeigt die Anordnung eines ersten eindimensionalen Arrays 5 auf einem ersten Ultraschallwandler 2 und eines zweiten eindimensionalen Arrays 7 auf einem zweiten Ultraschallwandler 3. Das erste Array 5 weist vier aktive Elemente 6 auf, das zweite Array 7 weist drei aktive Elemente 6 auf, die senkrecht zu dem ersten Array 5 orientiert sind.

Ist das erste Array 5 in einem ersten Betriebszustand 25 das Sendearray, so breitet sich das Messsignal 8 fächerartig im Inneren des Messrohrs aus. Dabei kann die Orientierung des Messsignals 8 in der Ebene des Arrays 5 variiert werden. In diesem ersten Betriebszustand 25 ist das zweite Array 7 der Ultraschallempfänger. Das zweite Array 7 ist derart ausgerichtet, dass es fächerartig das Messsignal erfasst. Dabei kann die Orientierung des fächerartigen Empfangsbereichs entlang der Messrohrachse variiert werden. Dies hat den Vorteil, dass die Anzahl an aktiven Elementen 6 insgesamt minimiert werden kann.

Ist dieses zweite Array 7 in einem nächsten Betriebszustand 26 Ultraschallsender, so kann es ein Messsignal 8 aussenden, dessen Orientierung entlang der Messrohrachse variiert werden kann.

Insgesamt lässt sich das Messsignal 8 im Betrieb in zwei Ebenen variieren. Im Vergleich zu Ultraschallwandlern, die zweidimensionale Arrays aufweisen, ist jedoch die Anzahl an aktiven Elementen 6 minimiert, sodass im Ergebnis das Ultraschalldurchflussmessgerät 1 weniger komplex ausgebildet ist.

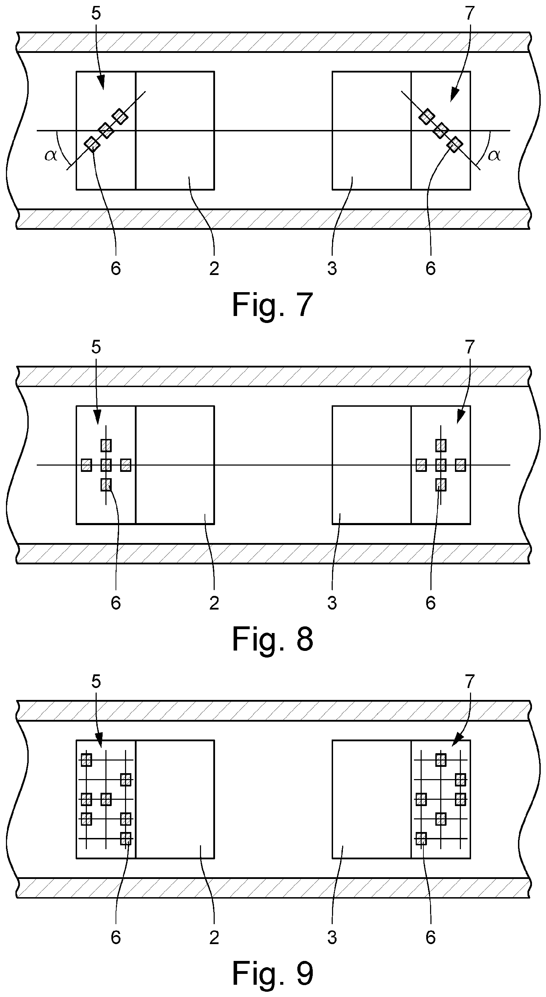

In Fig. 7 ist eine weitere Anordnung eines ersten eindimensionalen Arrays 5 auf einem ersten Ultraschallwandler 2 und einem zweiten eindimensionalen Array 7 auf einem zweiten Ultraschallwandler 3 dargestellt. Beide Arrays 5, 7 weisen im dargestellten Ausführungsbeispiel drei aktive Elemente 6 auf.

Die Arrays 5, 7 sind um einen Winkel α ausgehend von einer Parallelen zur Messrohrachse gegenläufig zueinander gedreht. Im dargestellten Ausführungsbeispiel beträgt der Winkel α ca. 45°, sodass die Arrays 5, 7 eine weitgehend gleiche Eingangsimpedanz aufweisen und damit ein möglichst guter reziproker Betrieb mit gleichen Messsignalen 8 in und entgegen der Strömungsrichtung gewährleistet werden kann.

Fig. 8 zeigt eine weitere Anordnung eines ersten zweidimensionalen Arrays 5 auf einem ersten Ultraschallwandler 2 und eines zweiten zweidimensionalen Arrays 7 auf einem zweiten Ultraschallwandler 3. Beide Arrays 5 und 7 weisen eine kreuzförmige Anordnung der aktiven Elemente 6 auf und sind damit identisch ausgebildet. Im Betrieb kann sowohl das von dem ersten Array 5 ausgesendete Messsignal 8 als auch das von dem zweiten Array 7 ausgesendete Messsignal 8 zumindest in zwei Ebenen variiert werden. Aufgrund der identischen Ausgestaltung und Anordnung der Arrays 5 und 7 weist auch dieses Ausführungsbeispiel die zuvor genannten Vorteile auf, dass die Arrays eine weitgehend gleich Eingangsimpedanz aufweisen und damit ein möglichst guter reziproker Betrieb mit gleichen Messsignalen 8 in und entgegen der Strömungsrichtung gewährleistet werden kann.

In Fig. 9 ist eine weitere Anordnung eines ersten zweidimensionalen Arrays 5 auf einem ersten Ultraschallwandler 2 und eines zweiten zweidimensionalen Arrays 7 auf einem zweiten Ultraschallwandler 3 dargestellt. Bei beiden Arrays 5 und 7 sind die aktiven Elemente 6 unregelmäßig auf einem regelmäßigen Gitter und zumindest teilweise mit großem Abstand angeordnet. Ist in einem ersten Betriebszustand 25 das erste Array 5 als Ultraschallsender ausgebildet, wird ein schmales konisches Messsignal 8 ausgesendet. Aufgrund der teilweise großen Abstände der aktiven Elemente 6 zueinander werden neben der Hauptkeule 12 gleichzeitig ebenso signifikante Nebenkeulen 13 und Gitterkeulen 14 realisiert. Das zweite Array 7 ist derart aufgebaut und wird im Betrieb derart angesteuert, dass sich lokale Minima der Strahlungscharakteristik des Empfängers mit den störenden Gitterkeulen und/oder Nebenkeulen des von dem Ultraschallsender 2 ausgesendeten Messsignals überlagern.

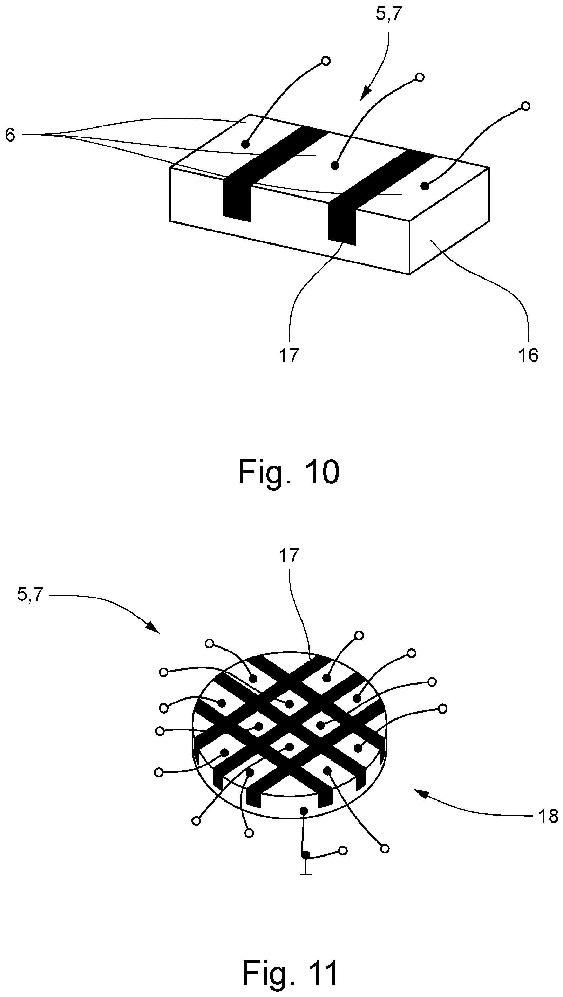

Eine Realisierung eines eindimensionalen Arrays 5 aus aktiven Elementen 6 ist in Fig 10 dargestellt. Hierzu sind in einen Barren 16 aus piezoelektrischem Material Spalte 17 mit einer vorbestimmten Tiefe gesägt.Die oberen Elektroden sind einzeln kontaktiert und insofern separat ansteuerbar, die untere Elektrode ist als gemeinsame Masseelektrode ausgebildet. Die Spalte 17 sind mit einem Füllmaterial, das insbesondere eine große akustische Dämpfung aufweist, gefüllt, um ein Übersprechen zwischen den einzelnen aktiven Elementen 6 zu vermeiden.

Fig. 11 zeigt ein weiteres Ausführungsbeispiel eines Arrays 5, 7 aus aktiven Elementen, das dadurch hergestellt ist, dass in eine piezoelektrische Scheibe 18 Spalte 17 gesägt sind, die mit einem akustisch isolierenden Material gefüllt sind. Im Unterschied zu dem in Fig. 9 gezeigten Ausführungsbeispiel ist das Array 5, 7 aus aktiven Elementen 6 zweidimensional ausgebildet. Die untere Elektrode ist ebenso wie in Fig. 9 dargestellt, als gemeinsame Masseelektrode ausgebildet.

Im Betrieb können alle aktiven Elemente 6 separat angesteuert werden, es können ebenso aber auch nur einige aktive Elemente 6 angesteuert werden.

Gemäß einem alternativen Ausführungsbeispiel kann das piezoelektrische Substrat auf einen festen Träger aufgebracht, beispielsweise geklebt, werden, und das piezoelektrische Substrat kann zur Herstellung der separaten aktiven Elemente 6 vollständig durchgesägt werden, beispielsweise derart, dass auch der feste Träger unter dem piezoelektrischen Substrat einen Spalt einer gewissen Tiefe aufweist. Der feste Träger kann beispielsweise als Leiterplatte ausgebildet sein oder ein Kunststoffträger oder ein Metallträger sein.

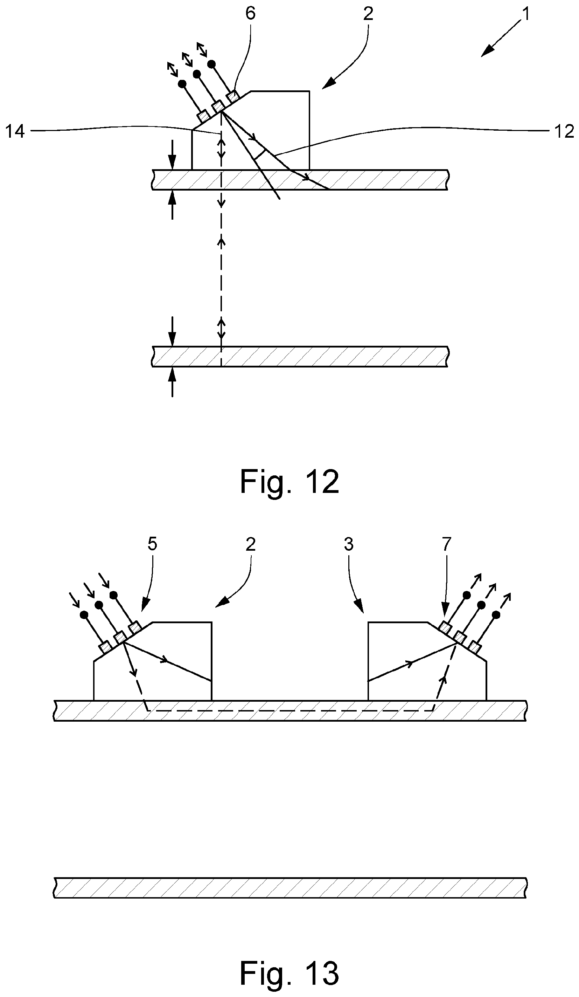

Fig. 12 zeigt ein Ausführungsbeispiel eines Durchflussmessgeräts 1, wobei lediglich der erste Ultraschallwandler 2, der in einem ersten Betriebszustand 25 als Ultraschallsender ausgebildet ist, dargestellt ist. Der erste Ultraschallwandler 2 weist ein Array 5 aus aktiven Elementen 6 auf, das im Betrieb ein Messsignal 8 bestehend aus einer Hauptkeule und wenigstens zwei Nebenkeulen 13 und zwei Gitterkeulen 14, aussendet. Im dargestellten Ausführungsbeispiel wird das Messsignal 8 derart auf das Messrohr ausgerichtet, dass wenigstens eine Gitterkeule 14 im Wesentlichen senkrecht auf die Messrohrwand auftrifft, wobei die Reflexion der Gitterkeule 14 am Messrohr erfasst und ausgewertet wird. Aus der Reflexion lässt sich eine Information über die Messrohrwanddicke gewinnen. Gemäß dieser Ausgestaltung können beispielsweise Ablagerungen an der inneren Messrohrwand erkannt und bei der weiteren Durchflussbestimmung berücksichtigt werden.

Fig. 13 zeigt ein nächstes Ausführungsbeispiel eines Durchflussmessgeräts 1 mit einem ersten Ultraschallwandler 2 und einem zweiten Ultraschallwandler 3, wobei beide Ultraschallwandler 2, 3 ein Array 5, 7 aus aktiven Elementen 6 aufweisen und wobei ein Teil des Messsignals 8 durch entsprechende Ansteuerung des als Ultraschallsender arbeitenden Arrays 5 derart ausgerichtet ist, dass es in der Messrohrwand eine Lamb-Welle anregt, die sich in Richtung des Ultraschallempfängers ausbreitet und von diesem erfasst wird. Im dargestellten Ausführungsbeispiel wird die Hauptkeule 12 derart ausgesendet, dass sie eine Lamb-Welle in der Messrohrwand anregt.

Alternativ kann das Array 5 auch derart angesteuert werden, dass eine Nebenkeule 13 oder eine Gitterkeule 14 eine Lamb-Welle in der Messrohrwand anregt.

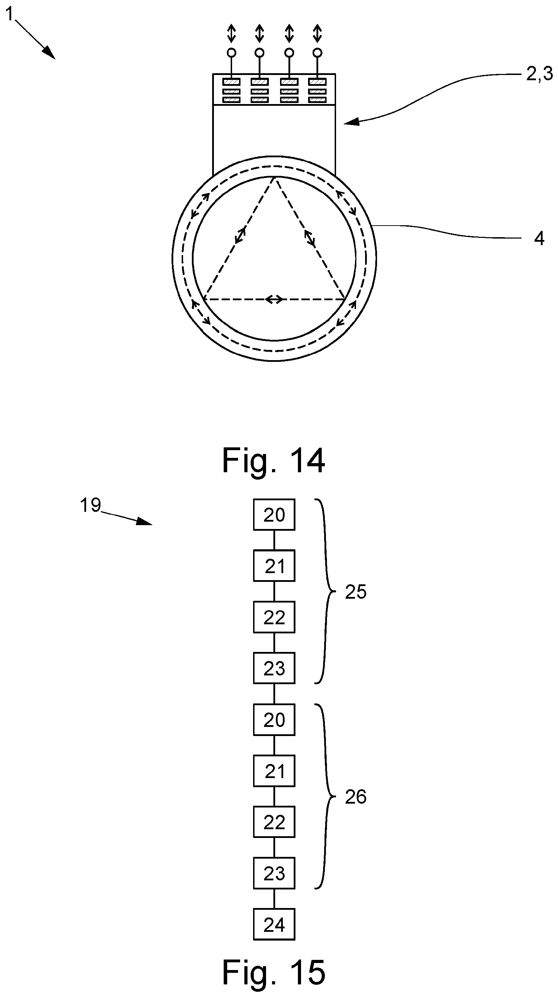

Fig. 14 zeigt ein weiteres Ausführungsbeispiel eines Durchflussmessgeräts 1, wobei ein Array 5, 7 aus aktiven Elementen 6 einen Teil des Messsignals 8 derart in die Messrohrwand einkoppelt, dass sich das Messsignal 8 entlang des Messrohrumfangs ausbreitet. Ein weiterer Teil des Messsignals 8 breitet sich innerhalb des Messrohrs aus und trifft nach einer Mehrzahl Reflexionen auf den Ultraschallempfänger.

Grundsätzlich kann der Signalpfad zwischen dem ersten und dem zweiten Ultraschallwandler v-förmig oder auch w-förmig ausgebildet sein oder auch gar keine Reflexion an der Innenwand des Messrohrs aufweisen. Ebenso kann der Signalpfad in Draufsicht auf das Messrohr als Polygon, insbesondere als Dreieck, Viereck oder Fünfeck ausgebildet sein.

In Fig 15 ist ein erstes Ausführungsbeispiel eines Verfahrens 19 zum Betreiben eines Ultraschalldurchflussmessgeräts dargestellt, wobei das Ultraschalldurchflussmessgerät 1 gemäß dem in Fig. 1 dargestellten Ausführungsbeispiel ausgebildet ist.

In einem ersten Betriebszustand 25 arbeitet der erste Ultraschallwandler 2 als Ultraschallsender und der zweite Ultraschallwandler 3 arbeitet als Ultraschallempfänger.

In einem ersten Verfahrensschritt 20 sendet das erste aktive Element 6 des Ultraschallsenders ein erstes Ultraschallsignal aus.

Gleichzeitig oder zeitversetzt sendet das zweite aktive Element 6 des Ultraschallsenders ein zweites Ultraschallsignal aus 21,
sodass sich das erste Ultraschallsignal und das zweite Ultraschallsignal zu dem Messsignal 8 überlagern 22.

Das Messsignal 8 weist eine Hauptkeule 12, zwei Nebenkeulen 13 und zwei Gitterkeulen 14 auf.

Die Hauptkeule 12 wird derart abgestrahlt, dass sie optimiert auf den Ultraschallempfänger trifft.

In einem nächsten Schritt 23 empfängt der Ultraschallempfänger das Messsignal 8 und leitet es an die Steuer- und Auswerteeinheit weiter.

In einem zweiten Betriebszustand 26 arbeitet nun der zweite Ultraschallwandler 3 als Ultraschallsender und der erste Ultraschallwandler 2 arbeitet als Ultraschallempfänger.

Da im dargestellten Ausführungsbeispiel auch der zweite Ultraschallwandler ein Array 7 aus wenigstens zwei aktiven Elementen 6 aufweist, wiederholen sich die Schritte 20 bis 23.

Anschließend bestimmt 24 die Steuer- und Auswerteeinheit 9 aus dem Laufzeitunterschied zwischen den in und entgegen der Strömungsrichtung ausgesendeten Messsignale 8 den Durchfluss.

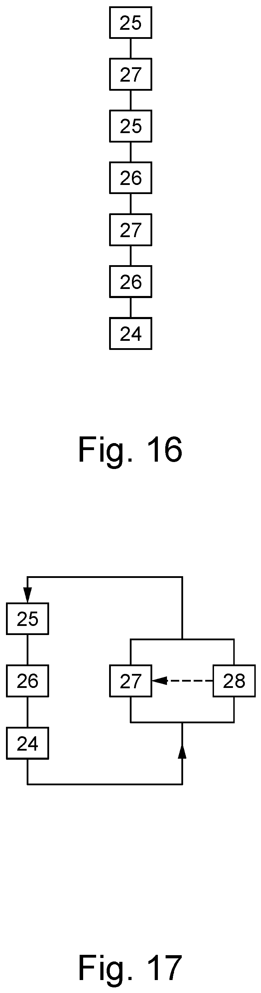

In dem in Fig. 16 gezeigte Ausführungsbeispiel des Verfahrens 19 befindet sich das Ultraschalldurchflussmessgerät 1 nach dem ersten Betriebszustand 25 in einem Justagezustand 27, in dem die Steuer- und Auswerteeinheit 9 die aktiven Elemente 6 des Ultraschallsenders derart ansteuert, dass das Messsignal 8, im Detail die Hauptkeule 12 um einen Winkel von ca 10° um die aktuelle Position der Hauptkeule verschwenkt wird. Während des Justagezustands erkennt und speichert die Steuer- und Auswerteeinheit 9 die Ansteuerungsparameter für die Position, in der das Signal am Ultraschallempfänger maximal ist.

Anschließend betreibt die Steuer- und Auswerteeinheit die aktiven Elemente 6 des ersten Ultraschallwandlers 2 mit den gefundenen Ansteuerungsparametern.

Anschießend wird auch die Ansteuerung des Arrays 7 aus aktiven Elementen des zweiten Ultraschallwandlers 3 wie zuvor beschrieben nachjustiert.

Eine solche Nachjustage der Ansteuerung der Arrays 5, 7 kann im Betrieb in regelmäßigen Abstand durchgeführt werden, um eine optimale Ansteuerung stets zu gewährleisten.

Alternativ oder zusätzlich kann eine solche Nachjustage 27 auch in Abhängigkeit der bestimmten Durchflussgeschwindigkeit durchgeführt werden.

Fig. 17 zeigt, dass nach der Bestimmung der Durchflussgeschwindigkeit 24, sofern festgestellt wird, dass die Geschwindigkeit einen oberen Grenzwert überschreitet oder einen unteren Grenzwert unterschreitet, eine Nachjustage der Ansteuerung der Arrays 5, 7 durchgeführt wird.

Die optimale Ansteuerung der Arrays kann entweder wie zuvor beschrieben durch ein leichtes Verschwenken der Hauptkeule 12 um die aktuelle Position herum festgestellt werden 27.

Alternativ oder auch zusätzlich kann in der Steuer- und Auswerteeinheit 9 ein Zusammenhang zwischen verschiedenen Durchflussgeschwindigkeiten und den Ansteuerungsparametern der Arrays 5, 7 hinterlegt sein, sodass mit der Bestimmung der Durchflussgeschwindigkeit die Ansteuerung der Arrays unmittelbar festgelegt ist 28.

Entsprechend kann die Nachjustage durchgeführt werden, wenn sich die Schallgeschwindigkeit ändert. Hierzu überwacht die Steuer- und Auswerteeinheit 9 ständig oder regelmäßig die Amplitude des Messsignals 8 am Ultraschallempfänger, wobei eine Nachjustage gemäß den Verfahrensschritten 27 oder 28 durchgeführt wird, wenn die Amplitude einen unteren Grenzwert unterschreitet.

In einem nächsten Ausführungsbeispiel des Verfahrens 19 wird in dem ersten Betriebszustand 25 und/oder dem zweiten Betriebszustand ein Messsignal gemäß den Schritten 20 bis 22 eines Arrays 5, 7 ausgesendet, wobei die Hauptkeule 12 in Richtung des Ultraschallempfängers ausgesendet wird und wobei eine Gitterkeule 14 derart in Richtung des Messrohrs 4 ausgesendet wird, dass durch den Empfang der Gitterkeule eine weitere Information über den Betriebszustand des Ultraschalldurchflussmessgeräts 1 oder über die Messumgebung gewonnen werden kann.

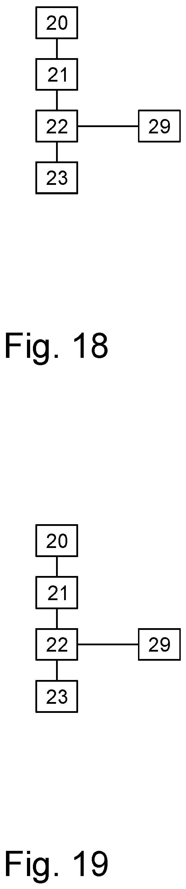

In dem in Fig. 18 gezeigten Ausführungsbeispiel wird die von dem ersten Array 5 ausgesendete Gitterkeule 14 senkrecht auf das Messrohr 4 ausgesendet, wobei die Reflexionen an der inneren und der äußeren Messrohrwand wieder von dem ersten Array 5 empfangen wird. Aus der Reflexion kann die Dicke der Messrohrwand bestimmt werden. Gemäß diesem Ausführungsbeispiel kann insofern das Vorhandensein von Ablagerungen an der Messrohrwand erkannt und bei der Bestimmung des Durchflusses berücksichtigt werden.

Bei dem in Fig. 19 gezeigten Ausführungsbeispiel wird die Gitterkeule 14 derart in die Messrohrwand eingekoppelt, dass sie eine Lamb-Welle anregt, die sich in Richtung des Ultraschallempfängers ausbreitet und von dem Ultraschallempfänger erfasst werden. Dabei kann die Lamb-Welle entweder zeitversetzt zu der Hauptkeule 12 auf den Ultraschallempfänger treffen oder auch von einem anderen aktiven Element 6 erfasst werden, sodass die Lamb-Welle von der Hauptkeule separat erfasst wird. Anschließen wird die Amplitude und/oder die Laufzeit und/oder das Spektrum der Lamb-Welle ausgewertet.

### Bezugszeichen

- 1: Ultraschalldurchflussmessgerät
- 2: erster Ultraschallwandler
- 3: zweiter Ultraschallwandler
- 4: Messrohr
- 5: erstes Array
- 6: Aktives Element
- 7: zweites Array
- 8: Messsignal
- 9: Steuer- und Auswerteeinheit
- 10: Keil
- 11: Messrohrwand
- 12: Hauptkeule
- 13: Nebenkeule
- 14: Gitterkeule
- 15: Abstrahlcharakteristik eines einzelnen Aktives Elementes
- 16: Barren
- 17: Spalt
- 18: Scheibe
- 19: Verfahren zum Betreiben eines Ultraschalldurchflussmessgeräts
- 20: Aussendung eines ersten Ultraschallsignals
- 21: Aussendung eines zweiten Ultraschallsignals
- 22: Überlagerung zu einem Messsignal
- 23: Empfang und Weiterleitung des Messsignals
- 24: Bestimmung des Durchflusses
- 25: erster Betriebszustand
- 26: zweiter Betriebszustand
- 27: Justagezustand
- 28: Justagezustand
- 29: Aussendung und Empfang einer Gitterkeule

## Patentansprüche

1. Ultraschalldurchflussmessgerät (1) umfassend wenigstens einen ersten Ultraschallwandler (2) und einen zweiten Ultraschallwandler (3) und weiter umfassend eine Steuer- und Auswerteeinheit (9), wobei die Steuer- und Auswerteeinheit (9) mit dem ersten Ultraschallwandler (2) und dem zweiten Ultraschallwandler (3) verbunden ist,
wobei der erste Ultraschallwandler (2) und/oder der zweite Ultraschallwandler (3) als Ultraschallsender und/oder Ultraschallempfänger ausgebildet ist bzw. sind,
wobei der erste Ultraschallwandler (2) und/oder der zweite Ultraschallwandler (3) als Keilwandler ausgebildet ist bzw. sind,
wobei der erste Ultraschallwandler (2) und der zweite Ultraschallwandler (3) derart an einem Messrohr (4) angeordnet sind, dass zwischen dem ersten (2) und dem zweiten Ultraschallwandler (4) ein Signalpfad ausgebildet ist, sodass ein von dem Ultraschallsender ausgesendetes Messsignal (8) über den Signalpfad zum Ultraschallempfänger verläuft,
wobei der erste Ultraschallwandler (2) ein erstes Array (5) aus wenigstens zwei aktiven Elementen (6) und/oder dass der zweite Ultraschallwandler (3) ein zweites Array (7) aus wenigstens zwei aktiven Elementen (6) aufweist, wobei wenigstens ein Ultraschallwandler (2, 3), der ein Array (5, 7) aus wenigstens zwei aktiven Elementen (6) aufweist, als Keilwandler ausgebildet ist,
wobei wenigstens zwei aktive Elemente (6) des auf dem ersten Ultraschallwandler (2) angeordneten Arrays (5) separat von der Steuer- und Auswerteeinheit (9) ansteuerbar sind und/oder dass wenigstens zwei aktive Elemente (6) des auf dem zweiten Ultraschallwandler (3) angeordneten Arrays (7) separat von der Steuer- und Auswerteeinheit (9) ansteuerbar sind, **dadurch gekennzeichnet,**
**dass** das Ultraschalldurchflussmessgerät zur Durchführung eines Verfahrens nach einem der Ansprüche 12 bis 22 ausgebildet ist.

2. Ultraschalldurchflussmessgerät (1) nach Anspruch 1, **dadurch gekennzeichnet, dass** der erste Ultraschallwandler (2) ein erstes Array (5) aus wenigstens zwei aktiven Elementen (6) und der zweite Ultraschallwandler (3) ein zweites Array (7) aus wenigstens zwei aktiven Elementen (6) aufweist und dass das erste Array (5) und das zweite Array (7) die gleiche Anzahl an aktiven Elementen (6) oder eine unterschiedliche Anzahl an aktiven Elementen (6) aufweisen.

3. Ultraschalldurchflussmessgerät (1) nach einem der Anspruch 1 bis 2, **dadurch gekennzeichnet, dass** der erste Ultraschallwandler (2) ein erstes Array (5) aus wenigstens zwei aktiven Elementen (6) und der zweite Ultraschallwandler (3) ein zweites Array (7) aus wenigstens zwei aktiven Elementen (6) aufweist und dass das erste Array (5) und das zweite Array (7) eine identische Anordnung oder eine unterschiedliche Anordnung der aktiven Elemente (6) aufweisen.

4. Ultraschalldurchflussmessgerät (1) nach einem der Ansprüche 1 bis 3, **dadurch gekennzeichnet, dass** das erste Array (5) und/oder das zweite Array (7) zumindest bereichsweise zweidimensional ausgebildet ist bzw. sind.

5. Ultraschalldurchflussmessgerät (1) nach einem der Ansprüche 1 bis 4, **dadurch gekennzeichnet, dass** das erste Array (5) und/oder das zweite Array (7) zumindest bereichsweise eindimensional ausgebildet ist bzw. sind.

6. Ultraschalldurchflussmessgerät (1) nach einem der Ansprüche 1 bis 5, **dadurch gekennzeichnet, dass** erste Array (5) und das zweite Array (7) eindimensional ausgebildet sind und dass das zweite Array (7) in einem Winkel zum ersten Array (5), im Wesentlichen senkrecht zum ersten Array (5), ausgerichtet ist.

7. Ultraschalldurchflussmessgerät (1) nach einem der Ansprüche 1 bis 6, **dadurch gekennzeichnet, dass** das erste Array (5) und/oder das zweite Array (7) dadurch hergestellt ist, dass in ein elektroakustisches Substrat wenigstens ein Spalt (17) eingebracht wird, sodass das Substrat an der Oberseite wenigstens zwei separat kontaktierbare Bereiche und an der Unterseite eine gemeinsame Masseverbindung aufweist, wobei der wenigstens eine Spalt (17) vorzugsweise mit einem akustisch isolierenden oder absorbierenden Material gefüllt ist.

8. Ultraschalldurchflussmessgerät (1) nach einem der Ansprüche 1 bis 6 **dadurch gekennzeichnet, dass** das erste Array (5) und/oder das zweite Array (7) dadurch hergestellt ist, dass ein elektroakustisches Substrat auf einen Träger aufgebracht wird und dass in das elektroakustische Substrat wenigstens ein Spalt (17) eingebracht wird, wobei der Spalt (17) das elektroakustische Substrat vollständig durchtrennt, wobei der wenigstens eine Spalt (17) vorzugsweise mit einem akustisch isolierenden oder absorbierenden Material gefüllt ist.

9. Ultraschalldurchflussmessgerät (1) nach einem der Ansprüche 1 bis 8, **dadurch gekennzeichnet, dass** die Anzahl an aktiven Elementen (6) und die Geometrie des ersten Arrays (5) und/oder des zweiten Arrays (7) in Abhängigkeit von dem zu erwartenden Schwenkwinkel des Messsignals festgelegt ist, wobei vorzugsweise gleichzeitig die Anzahl an aktiven Elementen (6) minimiert ist.

10. Ultraschalldurchflussmessgerät (1) nach einem der Ansprüche 1 bis 9, **dadurch gekennzeichnet, dass** die Anzahl an aktiven Elementen (6) und/oder die Geometrie des ersten Arrays (5) und des zweiten Arrays (7) derart aufeinander abgestimmt sind, dass unerwünschte Signalanteile des durch den Ultraschallsender ausgesendeten Messsignals durch Minima in der Empfangscharakteristik des Ultraschallempfängers unterdrückt werden.

11. Ultraschalldurchflussmessgerät (1) nach einem der Ansprüche 1 bis 10, **dadurch gekennzeichnet, dass** der erste Ultraschallwandler (2) und/oder der zweite Ultraschallwandler (3) ein elektroakustisches Substrat umfassend wenigstens eine erste und eine zweite elektroakustische Scheibe aufweisen, wobei die erste und die zweite elektroakustische Scheibe aufeinander angeordnet sind und wobei das Array (5, 7) aus aktiven Elementen (6) dieses Ultraschallwandlers (2, 3) in der ersten elektroakustischen Scheibe und/oder in der zweiten elektroakustischen Scheibe angeordnet ist.

12. Verfahren (19) zum Betreiben eines Ultraschalldurchflussmessgeräts (1), wobei das Ultraschalldurchflussmessgerät (1) wenigstens einen ersten Ultraschallwandler (2) und einen zweiten Ultraschallwandler (3) und eine Steuer- und Auswerteeinheit (9) umfasst, wobei die Steuer- und Auswerteeinheit (9) mit dem ersten Ultraschallwandler (2) und dem zweiten Ultraschallwandler (3) verbunden ist,
wobei der erste Ultraschallwandler (2) und/oder der zweite Ultraschallwandler (3) als Ultraschallsender und/oder Ultraschallempfänger ausgebildet ist bzw. sind,
wobei der erste Ultraschallwandler (2) und/oder der zweite Ultraschallwandler (3) als Keilwandler ausgebildet ist bzw. sind,
wobei der erste Ultraschallwandler (2) und der zweite Ultraschallwandler (3) derart an einem Messrohr (4) angeordnet sind, dass zwischen dem ersten (2) und dem zweiten Ultraschallwandler (3) ein Signalpfad ausgebildet ist, sodass ein von dem Ultraschallsender ausgesendetes Messsignal (8) über den Signalpfad zum Ultraschallempfänger verläuft,
wobei der erste Ultraschallwandler (2) ein erstes Array (5) aus wenigstens zwei aktiven Elementen (6) und/oder dass der zweite Ultraschallwandler (3) ein zweites Array (7) aus wenigstens zwei aktiven Elementen (6) aufweist, wobei wenigstens zwei aktive Elemente (6) des auf dem ersten Ultraschallwandler (2) angeordneten Arrays (5) separat von der Steuer- und Auswerteeinheit (9) angesteuert werden und/oder dass wenigstens zwei aktive Elemente (6) des auf dem zweiten Ultraschallwandler (3) angeordneten Arrays (7) separat von der Steuer- und Auswerteeinheit (9) angesteuert werden,
und dass die Steuer- und Auswerteeinheit das als Ultraschallsender funktionierende Array (5, 7) derart ansteuert, dass der Abstrahlwinkel des Messsignals zumindest zeitweise variiert wird und/oder dass die Steuer- und Auswerteeinheit (9) die Empfangscharakteristik des als Ultraschallempfänger funktionierenden Arrays zumindest zeitweise variiert,
sodass zur Bestimmung des Durchflusses während der Messung das Messsignals optimiert auf den Ultraschallempfänger trifft und/oder der Ultraschallempfänger das Messsignal optimiert auf den Abstrahlwinkel empfängt,
**dadurch gekennzeichnet, dass**
zur Installation der Ultraschallwandler (2, 3) auf dem Messrohr der Ultraschallsender ein Messsignal aussendet, wobei durch Verschwenken der Empfangscharakteristik des Ultraschallempfängers der Schwenkwinkel, unter dem der Ultraschallempfänger das Messsignal optimal empfängt, festgestellt wird und wobei die Steuer- und Auswerteeinheit ausgehend von dem Schwenkwinkel und unter Berücksichtigung der Geometrie des Signalpfads eine Position für den Ultraschallsender und/oder den Ultraschallempfänger, an der das Ultraschallsenderarray das Messsignal unverschwenkt aussendet und an der das Ultraschallempfängerarray das Messsignal unverschwenkt empfängt, bestimmt..

13. Verfahren nach Anspruch 12, **dadurch gekennzeichnet, dass** zumindest der in einem Betriebszustand (25, 26) als Ultraschallsender arbeitende Ultraschallwandler (2, 3) ein Array (5, 7) aus wenigstens zwei aktiven Elementen (6) aufweist, wobei die wenigstens zwei aktiven Elemente (6) des Ultraschallsenders von der Steuer- und Auswerteeinheit (9) separat ansteuerbar sind,
dass in einem ersten Betriebszustand (25) das erste aktive Element (6) des Ultraschallsenders ein erstes Ultraschallsignal aussendet (20) und
dass das zweite aktive Element (6) des Ultraschallsenders ein zweites Ultraschallsignal aussendet (21),
sodass sich das erste Ultraschallsignal und das zweite Ultraschallsignal zu dem Messsignal (8) überlagern (22).

14. Verfahren (19) nach einem der Ansprüche 12 bis 13, **dadurch gekennzeichnet, dass** das Messsignal (8) durch die Überlagerung von zumindest dem ersten Ultraschallsignal und dem zweiten Ultraschallsignal zumindest eine Hauptkeule (12) und optional wenigstens zwei Nebenkeulen (13) und/oder wenigstens zwei Gitterkeulen (14) aufweist.

15. Verfahren (19) nach einem der Ansprüche 12 bis 14, **dadurch gekennzeichnet, dass** das erste Ultraschallsignal und das zweite Ultraschallsignal zumindest zeitweise zeitversetzt und/oder mit unterschiedlicher Amplitude und/oder mit unterschiedlicher Phase ausgesendet werden, wodurch der Abstrahlwinkel des Messsignals (8), insbesondere der Hauptkeule (12) des Messsignals (8), verändert wird.

16. Verfahren nach einem der Ansprüche 12 bis 15, **dadurch gekennzeichnet, dass** zumindest zeitweise die an den einzelnen aktiven Elementen des als Ultraschallempfänger funktionierenden Arrays gemessenen Signale gegeneinander zeitverzögert und/oder phasenversetzt und/oder mit unterschiedlicher Amplitude gewichtet überlagert werden, wodurch die Empfangscharakteristik des Ultraschallempfängers verschwenkt wird.

17. Verfahren (19) nach einem der Ansprüche 12 bis 16, **dadurch gekennzeichnet, dass** die Steuer- und Auswerteeinheit (9) die vom Ultraschallempfänger erfasste Amplitude des Messsignals (8) überwacht und dass der Abstrahlwinkel des Messsignals (8) und/oder die Empfangscharakteristik des Ultraschallempfängers verändert wird, wenn die Amplitude unter einen Schwellwert sinkt.

18. Verfahren (19) nach Anspruch 17, **dadurch gekennzeichnet, dass** die Steuer- und Auswerteeinheit (9) zur Maximierung des Messsignals (8) am Ultraschallempfänger in regelmäßigen oder unregelmäßigen Abständen den Abstrahlwinkel des Messsignals (8) und/oder die Empfangscharakteristik des Ultraschallempfängers variiert, wobei die Steuer- und Auswerteeinheit (9) während der Variation ein Maximum der Amplitude am Ultraschallempfänger sowie die entsprechende Ansteuerungsparameter der aktiven Elemente (6) hierzu erfasst, und dass die Steuer- und Auswerteeinheit (9) anschließend das Array (5, 7) aus wenigstens zwei aktiven Elementen (6) des Ultraschallsenders und/oder des Ultraschallempfängers gemäß der bestimmten Ansteuerungsparameter ansteuert.

19. Verfahren (19) nach Anspruch 17 bis 18, **dadurch gekennzeichnet, dass** die Steuer- und Auswerteeinheit (9) den Abstrahlwinkel des von dem Ultraschallsender ausgesendeten Messsignals (8) und/oder die Empfangscharakteristik des Ultraschallempfängers in Abhängigkeit von der gemessenen Durchflussgeschwindigkeit des Mediums und/oder in Abhängigkeit von der Schallgeschwindigkeit des Mediums, derart anpasst, dass das Messsignal (8) am Ultraschallempfänger maximiert ist.

20. Verfahren (19) nach einem der Ansprüche 12 bis 19, **dadurch gekennzeichnet, dass** die Steuer- und Auswerteeinheit (9) eine Speichereinheit aufweist, wobei in der Speichereinheit ein Zusammenhang zwischen einem Abstrahlwinkel des Messsignals (8) bzw. Ansteuerungsparametern für das Array (5, 7) aus aktiven Elementen (6) des Ultraschallsenders und/oder des Ultraschallempfängers und verschiedenen Medien und/oder verschiedenen Durchflussgeschwindigkeiten und/oder verschiedenen Schallgeschwindigkeiten hinterlegt ist, sodass bei Änderung der Durchflussgeschwindigkeit und/oder bei Änderung des Mediums die Steuer- und Auswerteeinheit (9) den Abstrahlwinkel des Messsignals bzw. die Ansteuerungsparameter für das Array (5, 7) aus aktiven Elementen und/oder die Empfangscharakteristik des Ultraschallempfängers (6) automatisch gemäß dem hinterlegten Zusammenhang anpasst.

21. Verfahren (19) nach einem der Ansprüche 12 bis 20, **dadurch gekennzeichnet, dass** das Messsignal (8) wenigstens eine Hauptkeule (12) und wenigstens zwei Nebenkeulen (13) und/oder zwei Gitterkeulen (14) aufweist, dass zumindest zeitweise die wenigstens eine Hauptkeule oder wenigstens eine Nebenkeule (13) oder wenigstens ein Gitterkeule (14) derart auf das Messrohr (4) ausgerichtet wird, dass die Hauptkeule (12) oder die Nebenkeule (13) oder die Gitterkeule (14) am Messrohr (4) reflektiert wird und die Reflexion von dem zunächst als Ultraschallsender arbeitenden Array (5, 7) aus aktiven Elementen (6) wieder empfangen wird, und dass die Steuer- und Auswerteeinheit (9) aus der Reflexion der Hauptkeule (12) oder der Nebenkeule (13) oder der Gitterkeule (14) wenigstens eine Information über einen Betriebszustand und/oder die Messumgebung, bestimmt.

22. Verfahren (19) nach einem der Ansprüche 12 bis 21, **dadurch gekennzeichnet, dass** die wenigstens eine Hauptkeule (12) oder die wenigstens eine Nebenkeule (13) oder die wenigstens eine Gitterkeule (14) zumindest zeitweise derart auf das Messrohr (4) ausgerichtet wird, dass sie eine Lamb-Welle anregt, die sich entlang der Messrohrwand (11) in Richtung des Ultraschallempfängers ausbreitet und die von dem Ultraschallempfänger erfasst wird, wobei die Amplitude und/oder die Laufzeit und/oder das Spektrum der Lamb-Welle ausgewertet wird bzw. werden.

## Claims

1. Ultrasonic flowmeter (1) comprising at least a first ultrasonic transducer (2) and a second ultrasonic transducer (3) and further comprising a control and evaluation unit (9), wherein the control and evaluation unit (9) is connected to the first ultrasonic transducer (2) and the second ultrasonic transducer (3),
wherein the first ultrasonic transducer (2) and/or the second ultrasonic transducer (3) is/are designed as an ultrasonic transmitter and/or ultrasonic receiver,
wherein the first ultrasonic transducer (2) and/or the second ultrasonic transducer (3) is or are designed as a wedge transducer,
wherein the first ultrasonic transducer (2) and the second ultrasonic transducer (3) are arranged on a measuring tube (4) in such a way that a signal path is formed between the first (2) and the second ultrasonic transducer (4), so that a measuring signal (8) emitted by the ultrasonic transmitter runs via the signal path to the ultrasonic receiver,
wherein the first ultrasonic transducer (2) has a first array (5) of at least two active elements (6) and/or that the second ultrasonic transducer (3) has a second array (7) of at least two active elements (6), wherein at least one ultrasonic transducer (2, 3) which has an array (5, 7) of at least two active elements (6) is formed as a wedge transducer
wherein at least two active elements (6) of the array (5) arranged on the first ultrasonic transducer (2) are separately controllable by the control and evaluation unit (9) and/or that at least two active elements of the array (7) arranged on the second ultrasonic transducer (3) are separately controllable by the control and evaluation unit (9)
**characterized in**
**that** the ultrasonic flowmeter is designed for carrying out a method according to any one of claims 12 to 22.

2. Ultrasonic flowmeter (1) according to claim 1, **characterized in that** the first ultrasonic transducer (2) has a first array (5) of at least two active elements (6) and the second ultrasonic transducer (3) has a second array (7) of at least two active elements (6), and that the first array (5) and the second array (7) have the same number of active elements (6) or a different number of active elements (6).

3. Ultrasonic flowmeter (1) according to claim 1 or 2, **characterized in that** the first ultrasonic transducer (2) comprises a first array (5) of at least two active elements (6) and the second ultrasonic transducer (3) comprises a second array (7) of at least two active elements (6), and that the first array (5) and the second array (7) have an identical arrangement or a different arrangement of the active elements (6).

4. Ultrasonic flowmeter (1) according to any one of claims 1 to 3, **characterized in that** the first array (5) and/or the second array is or are formed two-dimensionally at least in regions.

5. Ultrasonic flowmeter (1) according to one of claims 1 to 4, **characterized in that** the first array (5) and/or the second array (7) is/are formed one-dimensionally at least in regions.

6. Ultrasonic flowmeter (1) according to one of claims 1 to 5, **characterized in that** first array (5) and the second array (7) are formed one-dimensionally and that the second array (7) is aligned at an angle to the first array (5), essentially perpendicular to the first array (5).

7. Ultrasonic flowmeter (1) according to any one of claims 1 to 6, **characterized in that** the first array (5) and/or the second array (7) is produced by introducing at least one gap (17) into an electro-acoustic substrate so that the substrate has at least two separately contactable regions on the upper side and a common ground connection on the lower side, wherein the at least one gap (17) is preferably filled with an acoustically insulating or absorbing material.

8. Ultrasonic flowmeter (1) according to one of claims 1 to 6, **characterized in that** the first array (5) and/or the second array (7) is produced by applying an electro-acoustic substrate to a carrier and by introducing at least one gap (17) into the electro-acoustic substrate, wherein the gap (17) completely cuts through the electro-acoustic substrate, wherein the at least one gap (17) is preferably filled with an acoustically insulating or absorbing material.

9. Ultrasonic flowmeter (1) according to any one of claims 1 to 8, **characterized in that** the number of active elements (6) and the geometry of the first array (5) and/or of the second array (7) is determined depending on the expected pivot angle of the measuring signal, wherein preferably at the same time the number of active elements (6) is minimized.

10. Ultrasonic flowmeter (1) according to one of claims 1 to 9, **characterized in that** the number of active elements (6) and/or the geometry of the first array (5) and of the second array (7) are matched to one another in such a way that undesired signal components of the measuring signal emitted by the ultrasonic transmitter are suppressed by minima in the reception characteristic of the ultrasonic receiver.

11. Ultrasonic flowmeter (1) according to any one of claims 1 to 10, **characterized in that** the first ultrasonic transducer (2) and/or the second ultrasonic transducer (3) comprise an electro-acoustic substrate comprising at least a first and a second electro-acoustic disc, wherein the first and the second electro-acoustic disc are arranged on top of each other and wherein the array (5, 7) of active elements (6) of this ultrasonic transducer (2, 3) is arranged in the first electro-acoustic disc and/or in the second electro-acoustic disc.

12. Method (19) for operating an ultrasonic flowmeter (1), wherein the ultrasonic flowmeter (1) comprises at least a first ultrasonic transducer (2) and a second ultrasonic transducer (3) and a control and evaluation unit (9), wherein the control and evaluation unit (9) is connected to the first ultrasonic transducer (2) and the second ultrasonic transducer (3),
wherein the first ultrasonic transducer (2) and/or the second ultrasonic transducer (3) is/are designed as an ultrasonic transmitter and/or ultrasonic receiver,
wherein the first ultrasonic transducer (2) and/or the second ultrasonic transducer (3) is or are designed as a wedge transducer,
wherein the first ultrasonic transducer (2) and the second ultrasonic transducer (3) are arranged on a measuring tube (4) in such a way that a signal path is formed between the first (2) and the second ultrasonic transducer (3), so that a measuring signal (8) emitted by the ultrasonic transmitter runs via the signal path to the ultrasonic receiver,
wherein the first ultrasonic transducer (2) has a first array (5) of at least two active elements (6) and/or that the second ultrasonic transducer (3) has a second array (7) of at least two active elements (6)
wherein at least two active elements (6) of the array (5) arranged on the first ultrasonic transducer (2) are separately controlled by the control and evaluation unit (9) and/or that at least two active elements (6) of the array (7) arranged on the second ultrasonic transducer (3) are separately controlled by the control and evaluation unit (9),
and that the control and evaluation unit drives the array (5, 7) functioning as an ultrasonic transmitter in such a way that the radiation angle of the measuring signal is varied at least at times and/or that the control and evaluation unit (9) varies the reception characteristic of the array functioning as an ultrasonic receiver at least at times,
so that, in order to determine the flow rate during measurement, the measuring signal impinges on the ultrasonic receiver in an optimized manner and/or the ultrasonic receiver receives the measuring signal in an optimized manner with respect to the radiation angle,
**characterized in**
**that** for installation of the ultrasonic transducers (2, 3) on the measuring tube, the ultrasonic transmitter emits a measuring signal, wherein by pivoting the reception characteristic of the ultrasonic receiver, the pivoting angle at which the ultrasonic receiver optimally receives the measuring signal, is determined and wherein the control and evaluation unit, starting from the pivoting angle and taking into account the geometry of the signal path, determines a position for the ultrasonic transmitter and/or the ultrasonic receiver at which the ultrasonic transmitter array transmits the measuring signal in a non-pivoted manner and at which the ultrasonic receiver array receives the measuring signal in a non-pivoted manner.

13. Method according to claim 12, **characterized in that** at least the ultrasonic transducer (2, 3) operating as an ultrasonic transmitter in an operating state (25, 26) has an array (5, 7) of at least two active elements (6), wherein the at least two active elements (6) of the ultrasonic transmitter are separately controllable by the control and evaluation unit (9),
that, in a first operating state (25), the first active element (6) of the ultrasonic transmitter emits (20) a first ultrasonic signal, and
that the second active element (6) of the ultrasonic transmitter emits a second ultrasonic signal (21),
so that the first ultrasonic signal and the second ultrasonic signal are superimposed (22) to form the measuring signal (8).

14. Method (19) according to any one of claims 12 to 13, **characterized in that** the measuring signal (8) has at least one main lobe (12) and optionally at least two side lobes (13) and/or at least two grid lobes (14) due to the superposition of at least the first ultrasonic signal and the second ultrasonic signal.

15. Method (19) according to any one of claims 12 to 14, **characterized in that** the first ultrasonic signal and the second ultrasonic signal are emitted at least at times with a time delay and/or with different amplitude and/or with different phase, whereby the radiation angle of the measuring signal (8), in particular of the main lobe (12) of the measuring signal (8), is changed.

16. Method according to any one of claims 12 to 15, **characterized in that**, at least at times, the signals measured at the individual active elements of the array functioning as an ultrasonic receiver are superimposed on one another in a time-delayed and/or phase-shifted manner and/or weighted with different amplitude, whereby the reception characteristic of the ultrasonic receiver is pivoted.

17. Method (19) according to any one of claims 12 to 16, **characterized in that** the control and evaluation unit (9) monitors the amplitude of the measuring signal (8) detected by the ultrasonic receiver, and that the radiation angle of the measuring signal (8) and/or the reception characteristic of the ultrasonic receiver is changed if the amplitude falls below a threshold value.

18. Method (19) according to claim 17, **characterized in that** the control and evaluation unit (9) varies the radiation angle of the measuring signal (8) and/or the reception characteristic of the ultrasonic receiver at regular or irregular intervals in order to maximize the measuring signal (8) at the ultrasonic receiver, wherein, during the variation, the control and evaluation unit (9) detects a maximum of the amplitude at the ultrasonic receiver as well as the corresponding drive parameters of the active elements (6) thereto, and that the control and evaluation unit (9) subsequently drives the array (5, 7) of at least two active elements (6) of the ultrasonic transmitter and/or of the ultrasonic receiver in accordance with the determined drive parameters.

19. Method (19) according to claim 17 to 18, **characterized in that** the control and evaluation unit (9) adjusts the radiation angle of the measuring signal (8) emitted by the ultrasonic transmitter and/or the reception characteristic of the ultrasonic receiver depending on the measured flow velocity of the medium and/or depending on the sonic velocity of the medium, in such a way that the measuring signal (8) is maximized at the ultrasonic receiver.

20. Method (19) according to any one of the claims 12 to 19, **characterized in that** the control and evaluation unit (9) has a memory unit, wherein a relationship between a radiation angle of the measuring signal (8) or control parameters for the array of active elements (6) of the ultrasonic transmitter and/or the ultrasonic receiver and different media and/or different flow rates and/or different sound velocities is stored in the memory unit, so that when the flow rate changes and/or when the medium changes, the control and evaluation unit (9) automatically adjusts the radiation angle of the measuring signal and/or the drive parameters for the array (5, 7) of active elements and/or the reception characteristic of the ultrasonic receiver (6) in accordance with the stored relationship.

21. Method (19) according to any one of claims 12 to 20, **characterized in that** the measuring signal (8) has at least one main lobe (12) and at least two side lobes (13) and/or two grid lobes (14), that at least at times the at least one main lobe or at least one side lobe (13) or at least one grid lobe (14) is aligned with the measuring tube (4) in such a way, that the main lobe (12) or the side lobe (13) or the grid lobe (14) is reflected at the measuring tube (4) and the reflection is received again by the array (5, 7) of active elements (6) initially operating as an ultrasonic transmitter, and that the control and evaluation unit (9) determines from the reflection of the main lobe (12) or the side lobe (13) or the grid lobe (14) at least one item of information about an operating state and/or the measuring environment.

22. Method (19) according to any one of claims 12 to 21, **characterized in that** the at least one main lobe (12) or the at least one side lobe (13) or the at least one grid lobe (14) is aligned at least temporarily with the measuring tube (4) in such a way that it excites a Lamb wave which propagates along the measuring tube wall (11) in the direction of the ultrasonic receiver and which is detected by the ultrasonic receiver, wherein the amplitude and/or the propagation time and/or the spectrum of the Lamb wave is evaluated.

## Revendications

1. Débitmètre à ultrasons (1) comprenant au moins un premier transducteur à ultrasons (2) et un deuxième transducteur à ultrasons (3) et comprenant en outre une unité de commande et d'évaluation (9), l'unité de commande et d'évaluation (9) étant connectée au premier transducteur à ultrasons (2) et au deuxième transducteur à ultrasons (3),
le premier transducteur à ultrasons (2) et/ou le deuxième transducteur à ultrasons (3) étant conçus comme un émetteur à ultrasons et/ou un récepteur à ultrasons,
le premier transducteur à ultrasons (2) et/ou le deuxième transducteur à ultrasons (3) étant conçus comme des transducteurs en coin,
le premier transducteur à ultrasons (2) et le deuxième transducteur à ultrasons (3) étant disposés sur un tube de mesure (4) de telle sorte qu'un trajet de signal soit formé entre le premier (2) et le deuxième transducteur à ultrasons (4), un signal de mesure (8) émis par l'émetteur à ultrasons se propageant sur le trajet de signal jusqu'au récepteur à ultrasons,
le premier transducteur à ultrasons (2) comportant un premier réseau (5) d'au moins deux éléments actifs (6) et/ou le deuxième transducteur à ultrasons (3) comportant un deuxième réseau (7) d'au moins deux éléments actifs (6), au moins un transducteur à ultrasons (2, 3) qui comporte un réseau (5, 7) d'au moins deux éléments actifs (6) étant conçu comme un transducteur en coin,
au moins deux éléments actifs (6) du réseau (5) disposé sur le premier transducteur à ultrasons (2) pouvant être commandés séparément par l'unité de commande et d'évaluation (9) et/ou au moins deux éléments actifs (6) du réseau (7) disposé sur le deuxième transducteur à ultrasons (3) pouvant être commandés séparément par l'unité de commande et d'évaluation (9), **caractérisé en ce que**
le débitmètre à ultrasons est conçu pour mettre en œuvre un procédé selon l'une quelconque des revendications 12 à 22.

2. Débitmètre à ultrasons (1) selon la revendication 1, **caractérisé en ce que** le premier transducteur à ultrasons (2) comporte un premier réseau (5) d'au moins deux éléments actifs (6) et le deuxième transducteur à ultrasons (3) comporte un deuxième réseau (7) d'au moins deux éléments actifs (6), et le premier réseau (5) et le deuxième réseau (7) comportent le même nombre d'éléments actifs (6) ou un nombre différent d'éléments actifs (6).

3. Débitmètre à ultrasons (1) selon l'une des revendications 1 à 2, **caractérisé en ce que** le premier transducteur à ultrasons (2) comporte un premier réseau (5) d'au moins deux éléments actifs (6) et le deuxième transducteur à ultrasons (3) comporte un deuxième réseau (7) d'au moins deux éléments actifs (6), et le premier réseau (5) et le deuxième réseau (7) présentent un agencement identique ou un agencement différent des éléments actifs (6).

4. Débitmètre à ultrasons (1) selon l'une des revendications 1 à 3, **caractérisé en ce que** le premier réseau (5) et/ou le deuxième réseau (7) est/sont réalisé(s) au moins par zones de manière bidimensionnelle.

5. Débitmètre à ultrasons (1) selon l'une des revendications 1 à 4, **caractérisé en ce que** le premier réseau (5) et/ou le deuxième réseau (7) est/sont réalisé(s) au moins par zones de manière unidimensionnelle.

6. Débitmètre à ultrasons (1) selon l'une des revendications 1 à 5, **caractérisé en ce que** le premier réseau (5) et le deuxième réseau (7) sont réalisés de manière unidimensionnelle et **en ce que** le deuxième réseau (7) est orienté selon un angle, par rapport au premier réseau (5), qui est sensiblement perpendiculaire au premier réseau (5).

7. Débitmètre à ultrasons (1) selon l'une des revendications 1 à 6, **caractérisé en ce que** le premier réseau (5) et/ou le deuxième réseau (7) est fabriqué en réalisant au moins une fente (17) dans un substrat électroacoustique, de sorte que le substrat présente, sur la face supérieure, au moins deux zones pouvant être mises en contact séparément et, sur la face inférieure, une connexion de masse commune, l'au moins une fente (17) étant de préférence remplie d'un matériau acoustiquement isolant ou absorbant.

8. Débitmètre à ultrasons (1) selon l'une des revendications 1 à 6, **caractérisé en ce que** le premier réseau (5) et/ou le deuxième réseau (7) est fabriqué en appliquant un substrat électroacoustique sur un support et en réalisant au moins une fente (17) dans le substrat électroacoustique, la fente (17) sectionnant entièrement le substrat électroacoustique, l'au moins une fente (17) étant de préférence remplie d'un matériau acoustiquement isolant ou absorbant.

9. Débitmètre à ultrasons (1) selon l'une des revendications 1 à 8, **caractérisé en ce que** le nombre d'éléments actifs (6) et la géométrie du premier réseau (5) et/ou du deuxième réseau (7) sont déterminés en fonction de l'angle de pivotement attendu du signal de mesure, le nombre d'éléments actifs (6) étant de préférence simultanément minimisé.

10. Débitmètre à ultrasons (1) selon l'une des revendications 1 à 9, **caractérisé en ce que** le nombre d'éléments actifs (6) et/ou la géométrie du premier réseau (5) et du deuxième réseau (7) sont adaptés l'un à l'autre de telle sorte que des parties de signal indésirables du signal de mesure émis par l'émetteur à ultrasons soient supprimées par des minima dans la caractéristique de réception du récepteur à ultrasons.

11. Débitmètre à ultrasons (1) selon l'une des revendications 1 à 10, **caractérisé en ce que** le premier transducteur à ultrasons (2) et/ou le deuxième transducteur à ultrasons (3) comporte(nt) un substrat électroacoustique comprenant au moins un premier et un deuxième disque électroacoustique, les premier et deuxième disques électroacoustiques étant disposés l'un sur l'autre et le réseau (5, 7) d'éléments actifs (6) de ce transducteur à ultrasons (2, 3) étant disposé dans le premier disque électroacoustique et/ou dans le deuxième disque électroacoustique.

12. Procédé (19) de fonctionnement d'un débitmètre à ultrasons (1), le débitmètre à ultrasons (1) comprenant au moins un premier transducteur à ultrasons (2) et un deuxième transducteur à ultrasons (3) et une unité de commande et d'évaluation (9), l'unité de commande et d'évaluation (9) étant connectée au premier transducteur à ultrasons (2) et au deuxième transducteur à ultrasons (3),
le premier transducteur à ultrasons (2) et/ou le deuxième transducteur à ultrasons (3) étant conçus comme un émetteur à ultrasons et/ou un récepteur à ultrasons,
le premier transducteur à ultrasons (2) et/ou le deuxième transducteur à ultrasons (3) étant conçus comme des transducteurs en coin,
le premier transducteur à ultrasons (2) et le deuxième transducteur à ultrasons (3) étant disposés sur un tube de mesure (4) de telle sorte qu'un trajet de signal soit formé entre le premier (2) et le deuxième transducteur à ultrasons (3), un signal de mesure (8) émis par l'émetteur à ultrasons se propageant par l'intermédiaire du trajet de signal jusqu'au récepteur à ultrasons,
le premier transducteur à ultrasons (2) comportant un premier réseau (5) d'au moins deux éléments actifs (6) et/ou le deuxième transducteur à ultrasons (3) comportant un deuxième réseau (7) d'au moins deux éléments actifs (6),
au moins deux éléments actifs (6) du réseau (5) disposé sur le premier transducteur à ultrasons (2) pouvant être commandés séparément par l'unité de commande et d'évaluation (9) et/ou au moins deux éléments actifs (6) du réseau (7) disposé sur le deuxième transducteur à ultrasons (3) pouvant être commandés séparément par l'unité de commande et d'évaluation (9),
et l'unité de commande et d'évaluation commandant le réseau (5, 7) fonctionnant comme émetteur à ultrasons de telle sorte que l'angle de rayonnement du signal de mesure soit amené à varier au moins temporairement et/ou l'unité de commande et d'évaluation (9) faisant varier au moins temporairement la caractéristique de réception du réseau fonctionnant comme récepteur à ultrasons,
de telle sorte que, pour la détermination du débit pendant la mesure, le signal de mesure atteigne le récepteur à ultrasons de manière optimale et/ou que le récepteur à ultrasons reçoive le signal de mesure de manière optimale en fonction de l'angle de rayonnement, **caractérisé en ce que**
pour l'installation des transducteurs à ultrasons (2, 3) sur le tube de mesure, l'émetteur à ultrasons émet un signal de mesure, l'angle de pivotement sous lequel le récepteur à ultrasons reçoit le signal de mesure de manière optimale étant déterminé par pivotement de la caractéristique de réception du récepteur à ultrasons, et l'unité de commande et d'évaluation déterminant, à partir de l'angle de pivotement et en tenant compte de la géométrie du trajet de signal, une position de l'émetteur à ultrasons et/ou du récepteur à ultrasons à laquelle le réseau émetteur à ultrasons émet le signal de mesure sans pivotement et à laquelle le réseau récepteur à ultrasons reçoit le signal de mesure sans pivotement.

13. Procédé selon la revendication 12, **caractérisé en ce qu'**au moins le transducteur à ultrasons (2, 3) fonctionnant comme émetteur à ultrasons, dans un état de fonctionnement (25, 26), comporte un réseau (5, 7) d'au moins deux éléments actifs (6), les au moins deux éléments actifs (6) de l'émetteur à ultrasons pouvant être commandés séparément par l'unité de commande et d'évaluation (9),
**en ce que**, dans un premier état de fonctionnement (25), le premier élément actif (6) de l'émetteur à ultrasons émet un premier signal ultrasonore (20) et
**en ce que** le deuxième élément actif (6) de l'émetteur à ultrasons émet un deuxième signal ultrasonore (21),
de sorte que le premier signal ultrasonore et le deuxième signal ultrasonore se superposent (22) pour former le signal de mesure (8).

14. Procédé (19) selon l'une des revendications 12 à 13, **caractérisé en ce que** le signal de mesure (8), du fait de la superposition d'au moins le premier signal ultrasonore et du deuxième signal ultrasonore, présente au moins un lobe principal (12) et facultativement au moins deux lobes secondaires (13) et/ou au moins deux lobes de réseau (14).

15. Procédé (19) selon l'une des revendications 12 à 14, **caractérisé en ce que** le premier signal ultrasonore et le deuxième signal ultrasonore sont émis au moins temporairement avec un décalage temporel et/ou avec une amplitude différente et/ou avec une phase différente, de telle sorte que l'angle de rayonnement du signal de mesure (8), en particulier le lobe principal (12) du signal de mesure (8), soit modifié.

16. Procédé selon l'une des revendications 12 à 15, **caractérisé en ce qu'**au moins temporairement, les signaux mesurés au niveau des différents éléments actifs du réseau fonctionnant comme récepteur à ultrasons sont superposés les uns aux autres avec un décalage temporel et/ou un déphasage et/ou une pondération d'amplitude différente, de telle sorte que la caractéristique de réception du récepteur à ultrasons soit amenée à pivoter.

17. Procédé (19) selon l'une des revendications 12 à 16, **caractérisé en ce que** l'unité de commande et d'évaluation (9) surveille l'amplitude du signal de mesure (8) détectée par le récepteur à ultrasons et **en ce que** l'angle de rayonnement du signal de mesure (8) et/ou la caractéristique de réception du récepteur à ultrasons est modifié(e) lorsque l'amplitude s'abaisse en dessous d'une valeur de seuil.

18. Procédé (19) selon la revendication 17, **caractérisé en ce que** l'unité de commande et d'évaluation (9), afin de maximiser le signal de mesure (8) au niveau du récepteur à ultrasons, fait varier à intervalles réguliers ou irréguliers l'angle de rayonnement du signal de mesure (8) et/ou la caractéristique de réception du récepteur à ultrasons, l'unité de commande et d'évaluation (9) détectant à cet effet pendant ladite variation un maximum de l'amplitude au niveau du récepteur à ultrasons ainsi que les paramètres de commande correspondants des éléments actifs (6), et **en ce que** l'unité de commande et d'évaluation (9) commande ensuite le réseau (5, 7) d'au moins deux éléments actifs (6) de l'émetteur à ultrasons et/ou du récepteur à ultrasons conformément aux paramètres de commande déterminés.

19. Procédé (19) selon les revendications 17 à 18, **caractérisé en ce que** l'unité de commande et d'évaluation (9) adapte l'angle de rayonnement du signal de mesure (8) émis par l'émetteur à ultrasons et/ou la caractéristique de réception du récepteur à ultrasons en fonction de la vitesse d'écoulement mesurée du milieu et/ou en fonction de la vitesse du son dans le milieu, de telle sorte que le signal de mesure (8) soit maximisé au niveau du récepteur à ultrasons.

20. Procédé (19) selon l'une des revendications 12 à 19, **caractérisé en ce que** l'unité de commande et d'évaluation (9) comporte une unité de mémorisation, dans laquelle est enregistrée une relation entre un angle de rayonnement du signal de mesure (8) ou des paramètres de commande du réseau (5, 7) d'éléments actifs (6) de l'émetteur à ultrasons et/ou du récepteur à ultrasons et différents milieux et/ou différentes vitesses d'écoulement et/ou différentes vitesses du son, de sorte qu'en cas de modification de la vitesse d'écoulement et/ou en cas de modification du milieu, l'unité de commande et d'évaluation (9) adapte automatiquement l'angle de rayonnement du signal de mesure ou les paramètres de commande du réseau (5, 7) d'éléments actifs et/ou la caractéristique de réception du récepteur à ultrasons (6) conformément à la relation enregistrée.

21. Procédé (19) selon l'une des revendications 12 à 20, **caractérisé en ce que** le signal de mesure (8) comporte au moins un lobe principal (12) et au moins deux lobes secondaires (13) et/ou deux lobes de réseau (14), **en ce qu'**au moins temporairement, l'au moins un lobe principal ou l'au moins un lobe secondaire (13) ou l'au moins un lobe de réseau (14) est orienté vers le tube de mesure (4) de telle sorte que le lobe principal (12) ou le lobe secondaire (13) ou le lobe de réseau (14) soit réfléchi par le tube de mesure (4) et que la réflexion soit de nouveau reçue par le réseau (5, 7) d'éléments actifs (6) fonctionnant initialement comme émetteur à ultrasons, et **en ce que** l'unité de commande et d'évaluation (9) détermine à partir de la réflexion du lobe principal (12) ou du lobe secondaire (13) ou du lobe de réseau (14) au moins une information concernant un état de fonctionnement et/ou l'environnement de mesure.

22. Procédé (19) selon l'une des revendications 12 à 21, **caractérisé en ce que** l'au moins un lobe principal (12) ou l'au moins un lobe secondaire (13) ou l'au moins un lobe de réseau (14) est orienté au moins temporairement vers le tube de mesure (4) de telle sorte qu'il excite une onde de Lamb qui se propage le long de la paroi (11) du tube de mesure en direction du récepteur à ultrasons et qui est détectée par le récepteur à ultrasons, l'amplitude et/ou le temps de propagation et/ou le spectre de l'onde de Lamb étant évalué(s).
